# EUROPEAN PATENT APPLICATION

(11) **EP 4 184 291 A1**
(43) Date of publication of application: **24.05.2023**
(21) Application number: 21845560.8
(22) Date of filing: 30.06.2021
(51) Int. Cl.: G06F 3/01

(54) **VIDEO PROCESSING METHOD FOR VIRTUAL REALITY (VR) SCENE, AND RELATED DEVICE**

(30) Priority: 20.07.2020 CN 202010701982
(71) Applicant: Huawei Technologies Co., Ltd., Shenzhen, Guangdong 518129 (CN)
(72) Inventor: YANG, Jun, Shenzhen, Guangdong 518129 (CN); WANG, Xuebin, Shenzhen, Guangdong 518129 (CN); ZHANG, Guanhua, Shenzhen, Guangdong 518129 (CN); SU, Min, Shenzhen, Guangdong 518129 (CN)
(74) Representative: Epping - Hermann - Fischer
(86) International application number: PCT/CN2021/103876
(87) International publication number: WO 2022/017149

(57) **Abstract**

A video processing method for a virtual reality VR scenario and a related device are disclosed, and relate to computer graphics technologies. According to the video processing method for a VR scenario, a tile stream may be encoded by using one stream, to reduce a video bit rate on a network side for transmitting a video stream to a VR head-mounted display device when a FOV of the VR head-mounted display device changes. The method may include: A server may receive a field of view switching request that is from an electronic device and that is for switching to a second field of view, where the field of view switching request requests to play a VR scenario video through the second field of view; and the server sends K tile streams to the electronic device in response to the field of view switching request. Each of the K tile streams includes one video stream, and K is a positive integer.

## Description

This application claims priority to Chinese Patent Application No. 202010701982.2, filed with the China National Intellectual Property Administration on July 20, 2020 and entitled "VIDEO PROCESSING METHOD FOR VIRTUAL REALITY VR SCENARIO AND RELATED DEVICE", which is incorporated herein by reference in its entirety.

### TECHNICAL FIELD

Embodiments of this application relate to the field of computer graphics technologies, and in particular, to a video processing method for a virtual reality VR scenario and a related device.

### BACKGROUND

A virtual reality (Virtual Reality, VR) technology is a computer simulation technology that can create a virtual reality environment. It can use a computer to generate a virtual reality environment (or referred to as a simulation environment). A basic implementation of VR is as follows: A computer obtains data (for example, a picture or a sound) for creating a virtual reality environment, converts the data for creating the virtual reality environment into an electronic signal by using a computer technology, and an output device (for example, a VR head-mounted display device) receives the electronic signal. In this case, the output device may construct the virtual reality environment based on the electronic signal.

It may be understood that in the VR technology, the computer may construct a VR environment of all angles of view (or referred to as fields of view). When displaying the VR environment, the output device (for example, a VR head-mounted display device) for displaying the VR only needs to display a VR environment in a field of view (Field of View, FOV) of the current output device based on the FOV

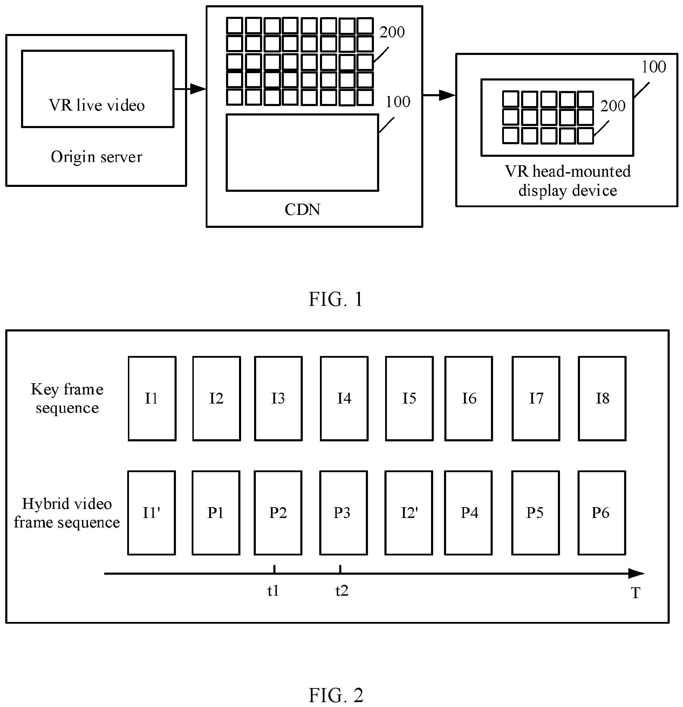

VR live streaming is a combination of a VR technology and a live video. A solution used by a VR head-mounted display device (or a "VR HMD" for short) to display a VR live video is a stream transport (Tile-Wise Streaming, TWS) solution that is based on tile (Tile) division. Refer to FIG. 1. In the TWS solution, a computer (or an origin server) constructs a VR live video with all fields of view, the origin server transmits the VR live video to a content delivery network (CDN), and a VR head-mounted display device downloads a VR live video in a corresponding FOV from the CDN based on a current field of view. The VR live video in the origin server includes a low-quality picture 100 with a full field of view and a plurality of high-quality pictures 200. The low-quality picture 100 with a full field of view is a picture that is in the VR live video and that includes all fields of view, and the high-quality picture 200 is a part of a high-quality picture with a full field of view. For example, the high-quality picture with a full field of view is divided into 42 parts, and a picture of each part is a high-quality picture 200. The high-quality picture 200 corresponds to one tile stream (Tile stream), and one FOV generally includes 12 to 18 tile streams. Specifically, when displaying the VR live video, the VR head-mounted display device needs to obtain, from the CDN, a tile stream corresponding to the low-quality picture 100 with a full field of view and 12 to 18 high-quality pictures 200 in a FOV range of the VR head-mounted display device. Further, the VR head-mounted display device may splice the 12 to 18 high-quality pictures 200 in the tile stream, to generate a high-quality VR live video in the FOV range in the low-quality picture 100 with a full field of view, and present the high-quality VR live video by using the VR head-mounted display device. When a user watches VR live streaming by using the VR head-mounted display device, if the user turns the head, in other words, a FOV of the VR head-mounted display device changes, a corresponding tile stream that is in the FOV range and that needs to be obtained by the VR head-mounted display device also changes. In this case, the VR head-mounted display device may download a corresponding tile stream from the origin server based on a tile stream corresponding to a FOV obtained after the user turns the head, and quickly present, to the user, a high-quality VR live video in the tile stream in the FOV of the VR head-mounted display device obtained after the user turns the head. Generally, each tile stream in the VR live video constructed by the origin server includes two streams. For example, one stream is a full key frame stream, and the other stream is a hybrid video frame stream. When the FOV of the VR head-mounted display device changes, the VR head-mounted display device needs to download two streams in each tile stream in a converted field of view, to perform switching. If there are a large quantity of key frames in the tile stream, a network for transmitting a video stream to the VR head-mounted display device needs to transmit a large video bit rate. In this case, a phenomenon that it is difficult for the network to bear may occur. Therefore, when the FOV of the VR head-mounted display device changes in the VR live video, how to ensure that the network for transmitting the video stream to the VR head-mounted display device can bear a video bit rate becomes a technical problem that urgently needs to be resolved.

### SUMMARY

This application provides a video processing method for a virtual reality VR scenario and a related device. A tile stream may be encoded by using one stream, to reduce a video bit rate on a network side for transmitting a video stream to a VR head-mounted display device when a FOV of the VR head-mounted display device changes.

To achieve the foregoing technical objective, the following technical solutions are used in this application.

According to a first aspect, this application provides a video processing method for a virtual reality VR scenario. The method may be applied to a server. The method may include: The server may receive a field of view switching request that is from an electronic device and that is for switching to a second field of view, where the field of view switching request requests to play a VR scenario video through the second field of view; and the server sends K tile streams to the electronic device in response to the field of view switching request. Each of the K tile streams includes one video stream, and K is a positive integer. It should be noted that the server may create M tile streams included in the VR scenario video, where the M tile streams may form the VR scenario video with a full field of view. In the M tile streams in the VR scenario video, the K tile streams are a tile stream corresponding to the second field of view. Therefore, the server sends the K tile streams to the electronic device in response to the field of view switching request. Each of the K tile streams includes one video stream. It may be understood that when the electronic device is in a first field of view, the electronic device may request to obtain a plurality of tile streams corresponding to the first field of view. If a field of view of the electronic device is switched, for example, the field of view of the electronic device is switched to the second field of view, the electronic device may send, to the server, the field of view switching request for switching to the second field of view, to obtain a plurality of tile streams corresponding to the second field of view. In other words, in a process of switching the field of view of the electronic device, a tile stream received by the electronic device is always a tile stream corresponding to the field of view of the electronic device, and each tile stream corresponds to only one video stream. In a process of switching the field of view of the electronic device, the server may send, to the electronic device based on the field of view switching request of the electronic device, the tile stream corresponding to the field of view, to reduce a video bit rate transmitted by the server to the electronic device. In this way, in a process of displaying the VR scenario video by the electronic device, a transmission network between the electronic device and the server can always bear a transmitted video stream.

In a possible design of the first aspect, each tile stream in the VR scenario video created by the server includes a plurality of slices (Slices), each slice may include a plurality of groups of pictures (Groups Of Pictures, GOPs), and each GOP may include a key frame and X predictive frames after the key frame, where X≥2, and X is a positive integer.

A frame rate of the tile stream is fixed, and the tile stream is formed by the plurality of slices. The group of pictures in the slices includes pictures of a key frame and a predictive frame. Compared with a tile stream formed by all key frames, a picture bit rate of a group of pictures formed by a key frame and a predictive frame is lower. This reduces a bit rate of a tile stream.

In another possible design of the first aspect, before that the server receives a field of view switching request from an electronic device, the server may further receive a VR video request from the electronic device. The VR video request may request to play the VR scenario video through the first field of view. The server may send N tile streams to the electronic device in response to the VR video request. The N tile streams are a tile stream that is in the M tile streams in the server and that corresponds to the first field of view, and each of the N tile streams includes one video stream. It may be understood that the VR scenario video is a video with a full field of view. When playing the VR scenario video, the electronic device plays only a VR scenario video corresponding to a current field of view. The electronic device is started, the electronic device sends the VR video request of the current field of view (the first field of view) to the server, and the server sends, to the electronic device, the N tile streams corresponding to the current field of view. If the field of view of the electronic device is switched from the first field of view to the second field of view, the electronic device sends the field of view switching request to the server, so that the server sends, to the electronic device, the plurality of tile streams (the K tile streams) corresponding to the second field of view (namely, the second field of view in field of view switching). In this way, a video stream sent by the server to the electronic device is not increased.

In another possible design of the first aspect, for that the server sends K tile streams to the electronic device in response to the field of view switching request, during implementation, the following operation may be performed: The server obtains, in response to the field of view switching request, a timestamp at which the electronic device plays the N tile streams. The timestamp indicates that the electronic device is playing a first video frame in the N tile streams, and the first video frame is a key frame or a predictive frame. Further, the server may determine a second video frame in the K tile streams based on the timestamp and preset switching duration in the serve. The second video frame is a key frame or a predictive frame. The server may send the K tile streams to the electronic device starting from the second video frame.

It may be understood that after the field of view of the electronic device is switched, the electronic device sends the switched field of view to the server, and the electronic device plays the tile stream received from the server. In this way, the server may determine, based on the timestamp at which the electronic device currently plays the video frame in the first field of view, that one picture in a GOP in the tile stream that is in the second field of view and that is sent to the electronic device is a start frame and sequentially starts to send the K tile streams to the electronic device.

In another possible design of the first aspect, the method may further include: If the second video frame is the predictive frame, the server sends, to the electronic device, a key frame in a GOP in which the second video frame is located.

It should be noted that when the second video frame sent by the server to the electronic device is the predictive frame, the electronic device needs to decode the second video frame. A predictive frame can be decoded in a GOP only by using a key frame in a GOP in which the predictive frame is located. Therefore, the server may send, to the electronic device, the key frame in the GOP in which the second video frame is located, so that the electronic device can decode the second video frame based on the key frame, to ensure that the electronic device can normally decode the second video frame and play a VR scenario video corresponding to the second field of view.

In another possible design of the first aspect, if the second video frame is the key frame, the server sends the K tile streams to the electronic device by using the key frame as a start frame in the K tile streams.

In another possible design of the first aspect, the method may further include: The server receives a video frame request from the electronic device. The video frame request includes a frame sequence number of the key frame in the GOP in which the second video frame is located, and the frame sequence number indicates an identifier of the key frame in the GOP in which the second video frame is located. The server sends, in response to the video frame request, to the electronic device, the key frame in the GOP in which the second video frame is located.

It may be understood that the electronic device may calculate a timestamp at which the electronic device plays the second video frame in the K tile streams corresponding to the second field of view, the electronic device may determine an identifier of the corresponding second video frame based on the calculated timestamp of the second video frame, and the electronic device requests the second video frame from the server.

In another possible design of the first aspect, if the second video frame is the key frame, the server receives a video frame request from the electronic device. The video frame request includes a frame sequence number of the key frame in a GOP, and the frame sequence number of the key frame indicates an identifier of the key frame in the GOP. The server sends the key frame to the electronic device in response to the video frame request.

In another possible design of the first aspect, the field of view switching request includes the second field of view, and the second field of view is used to determine the K tile streams corresponding to the second field of view.

Alternatively, the field of view switching request includes an identifier of the K tile streams and the frame sequence number of the second video frame corresponding to the K tile streams, and if the second video frame is the predictive frame, the field of view switching request further includes the frame sequence number of the key frame in the GOP in which the second video frame is located.

The frame sequence number of the second video frame indicates the identifier of the second video frame in the GOP, and the frame sequence number of the key frame indicates the identifier of the key frame in the GOP.

The electronic device may detect a change of the field of view, the electronic device may request, based on the change of the field of view, a plurality of tile streams corresponding to the field of view, and the electronic device may request the plurality of corresponding tile streams from the server.

In another possible design of the first aspect, the server sends the low-resolution background stream, with a full field of view, of the VR scenario video to the electronic device in response to the VR video request.

It should be noted that when the electronic device displays the VR scenario video, the server may always send the low-resolution background stream with a full field of view to the electronic device based on the VR video request of the electronic device. In this way, the electronic device may display the background stream with a full field of view, and display, in an overlay manner on the background stream, the VR scenario video corresponding to the field of view of the electronic device. While ensuring a display effect of the electronic device, it also ensures that in a process of switching the field of view of the electronic device, the electronic device may display the low-resolution background stream, to ensure that the electronic device displays a continuous VR scenario video.

According to a second aspect, this application further provides a video processing method for a VR scenario. The method may include: sending a field of view switching request to a server when a field of view of an electronic device changes, where the field of view switching request requests to play a VR scenario video through a second field of view, the VR scenario video created by the server includes M tile streams, and M is a positive integer; and receiving K tile streams from the server, where the K tile streams are a tile stream that is in the M tile streams and that corresponds to the second field of view, and each of the K tile streams includes one video stream. The electronic device plays, based on the K tile streams, a VR scenario video corresponding to the second field of view.

The M tile streams in the server may form a high-resolution VR scenario video with a full field of view. The electronic device may send the field of view switching request to the server, so that the server can send, to the electronic device in response to the field of view switching request of the electronic device, a plurality of tile streams corresponding to a switched field of view.

In a possible design of the second aspect, the electronic device may be a wearable electronic device, and the server may be a server that is in a content delivery network and that serves the electronic device.

In another possible design of the second aspect, the tile stream includes a plurality of slices, each slice includes a plurality of groups of pictures GOPs, and each GOP includes a key frame and X predictive frames after the key frame, where X≥2, and X is a positive integer.

In another possible design of the second aspect, before the sending a field of view switching request to a server when a field of view of an electronic device changes, the method further includes: The electronic device may send a VR video request to the server, where the VR video request requests to play the VR scenario video through a first field of view. The electronic device receives N tile streams from the server, where the N tile streams are a tile stream that is in the M tile streams and that corresponds to the first field of view, and each of the N tile streams includes one video stream. The electronic device plays the VR scenario video based on the N tile streams through the first field of view. In another possible design of the second aspect, the method may further include: determining a timestamp at which the electronic device is playing a first video frame in the N tile streams, where the first video frame is a key frame or a predictive frame.

That the electronic device plays, based on the K tile streams, a VR scenario video corresponding to the second field of view includes: The electronic device determines, based on the timestamp and preset switching duration, to play a second video frame in the K tile streams, where the second video frame is a key frame or a predictive frame. The electronic device plays, starting from the second video frame, the VR scenario video based on the K tile streams through the second field of view.

In another possible design of the second aspect, if the second video frame is the predictive frame, the electronic device plays, starting from the second video frame, the VR scenario video based on the K tile streams through the second field of view.

In another possible design of the second aspect, the method may further include: determining a timestamp at which the electronic device is playing a first video frame in the N tile streams. The first video frame is a key frame or a predictive frame. The electronic device sends the timestamp to the server. The timestamp is used to determine, with reference to preset switching duration, that the server starts to send a second video frame in the K tile streams to the electronic device, and the second video frame is a key frame or a predictive frame.

That the electronic device plays, based on the K tile streams, a VR scenario video corresponding to the second field of view includes: The electronic device plays, starting from the second video frame, the VR scenario video based on the K tile streams through the second field of view.

In another possible design of the second aspect, the second video frame is the predictive frame, and the method may further include: The electronic device obtains, from the server, a key frame in a GOP in which the second video frame is located.

That the electronic device plays, starting from the second video frame, the VR scenario video based on the K tile streams through the second field of view includes: The electronic device decodes the second video frame based on the key frame in the GOP in which the second video frame is located, and plays, starting from the second video frame, the VR scenario video based on the K tile streams and through the second field of view.

In another possible design of the second aspect, the field of view switching request includes the second field of view, and the second field of view is used to determine the K tile streams corresponding to the second field of view; or the field of view switching request includes an identifier of the K tile streams and a frame sequence number of the second video frame corresponding to the K tile streams.

In another possible design of the second aspect, the method further includes: The electronic device receives a low-resolution background stream, with a full field of view, of the VR scenario video from the server.

According to a third aspect, this application further provides a video processing method for a VR scenario. The method may be applied to a system including a content delivery network (Content Delivery Network, CDN) and an electronic device. It should be noted that the CDN may obtain a VR scenario video created by a server based on a VR scenario material, where the VR scenario video includes M tile streams, M is a positive integer, and each of the M tile streams includes one video stream. The M tile streams may construct a VR scenario video with a full field of view.

The video processing method for a VR scenario may include: sending a field of view switching request to the CDN when a field of view of the electronic device changes, where the field of view switching request requests to play the VR scenario video through a second field of view. The CDN may receive the field of view switching request that is from the electronic device and that is for switching to the second field of view. In response to the field of view switching request, the CDN may send K tile streams to the electronic device. The K tile streams are a tile stream that is in the M tile streams in the VR scenario video in the CDN and that corresponds to the second field of view. The electronic device may receive the K tile streams from the CDN, and the electronic device plays, based on the K tile streams, a VR scenario video corresponding to the second field of view.

It may be understood that each of the M tile streams obtained by the CDN from the server is one video stream, and each of the K tile streams sent by the CDN to the electronic device is one video stream.

In a possible design of the third aspect, the method may further include: The electronic device determines a timestamp at which the electronic device is playing a first video frame in N tile streams. The first video frame is a key frame or a predictive frame.

That the electronic device plays, based on the K tile streams, a VR scenario video corresponding to the second field of view includes: The electronic device determines, based on the timestamp and preset switching duration, to play a second video frame in the K tile streams, where the second video frame is a key frame or a predictive frame. The electronic device plays, starting from the second video frame, the VR scenario video based on the K tile streams through the second field of view.

In another possible design of the third aspect, if the second video frame is the predictive frame, the electronic device plays, starting from the second video frame, the VR scenario video based on the K tile streams through the second field of view.

In another possible design of the third aspect, the method may further include: determining a timestamp at which the electronic device is playing a first video frame in the N tile streams. The first video frame is a key frame or a predictive frame. The electronic device sends the timestamp of the first video frame to the CDN. The timestamp is used to determine, with reference to preset switching duration, that the CDN starts to send a second video frame in the K tile streams to the electronic device, and the second video frame is a key frame or a predictive frame.

That the electronic device plays, based on the K tile streams, a VR scenario video corresponding to the second field of view includes: The electronic device plays, starting from the second video frame, the VR scenario video based on the K tile streams through the second field of view.

In another possible design of the third aspect, the second video frame is the predictive frame, and the method may further include: The electronic device obtains, from the CDN, a key frame in a GOP in which the second video frame is located.

That the electronic device plays, starting from the second video frame, the VR scenario video based on the K tile streams through the second field of view includes: The electronic device decodes the second video frame based on the key frame in the GOP in which the second video frame is located, and plays, starting from the second video frame, the VR scenario video based on the K tile streams and through the second field of view.

In another possible design of the third aspect, the field of view switching request includes the second field of view, and the second field of view is used to determine the K tile streams corresponding to the second field of view; or the field of view switching request includes an identifier of the K tile streams and a frame sequence number of the second video frame corresponding to the K tile streams. If the second video frame is the predictive frame, the field of view switching request further includes a frame sequence number of the key frame in the GOP in which the second video frame is located.

The frame sequence number of the second video frame indicates an identifier of the second video frame in the GOP, and the frame sequence number of the key frame indicates an identifier of the key frame in the GOP.

In another possible design of the third aspect, the method may further include: The server sends a low-resolution background stream, with a full field of view, of the VR scenario video to the electronic device in response to the VR video request.

According to a fourth aspect, this application further provides a server. The server may include: a receiving module and a sending module. The receiving module may receive a field of view switching request that is from an electronic device and that is for switching to a second field of view, where the field of view switching request requests to play a VR scenario video through the second field of view. The sending module is configured to send K tile streams to the electronic device in response to the field of view switching request. Each of the K tile streams includes one video stream, and K is a positive integer.

It may be understood that the server may further include a creating module, where the creating module may be configured to create M tile streams included in the VR scenario video. Specifically, the M tile streams may form the VR scenario video with a full field of view. In the M tile streams in the VR scenario video, the K tile streams are a tile stream corresponding to the second field of view. Therefore, the server sends the K tile streams to the electronic device in response to the field of view switching request. The electronic device can create the VR scenario video with a full field of view based on the received K tile streams.

In a possible design of the fourth aspect, each tile stream in the VR scenario video created by the server includes a plurality of slices (Slices), each slice may include a plurality of groups of pictures (Groups Of Pictures, GOPs), and each GOP may include a key frame and X predictive frames after the key frame, where X≥2, and X is a positive integer.

In another possible design of the fourth aspect, the receiving module may be further configured to receive a VR video request from the electronic device, where the VR video request may request to play the VR scenario video through a first field of view. The sending module may be further configured to send N tile streams to the electronic device in response to the VR video request. The N tile streams are a tile stream that is in the M tile streams in the server and that corresponds to the first field of view, and each of the N tile streams includes one video stream.

In another possible design of the fourth aspect, the server may further include an obtaining module and a determining module. When the server responds to the field of view switching request, the obtaining module may be configured to obtain a timestamp at which the electronic device plays N tile streams. The timestamp indicates that the electronic device is playing a first video frame in the N tile streams, and the first video frame is a key frame or a predictive frame. The determining module may be configured to determine a second video frame in the K tile streams based on the timestamp and preset switching duration in the server. The second video frame is a key frame or a predictive frame. The sending module may send the K tile streams to the electronic device starting from the second video frame.

In another possible design of the fourth aspect, if the second video frame is the predictive frame, the sending module may further send, to the electronic device, a key frame in a GOP in which the second video frame is located.

In another possible design of the fourth aspect, the video frame request includes a frame sequence number of the key frame in the GOP in which the second video frame is located, and the frame sequence number indicates an identifier of the key frame in the GOP in which the second video frame is located. The sending module may send, to the electronic device, the key frame in the GOP in which the second video frame is located.

In another possible design of the fourth aspect, the sending module may be further configured to send a low-resolution background stream, with a full field of view, of the VR scenario video to the electronic device.

According to a fifth aspect, this application further provides a server, where the server includes a memory and one or more processors, and the memory is coupled to the processor. The memory is configured to store computer program code, the computer program code includes computer instructions. When the processor executes the computer instructions, the server is enabled to perform steps corresponding to the server in any one of the first aspect and the possible designs of the first aspect, any one of the second aspect and the possible designs of the second aspect, and any one of the third aspect and the possible designs of the third aspect.

According to a sixth aspect, this application further provides an electronic device. The electronic device may include: a sending module and a receiving module. When a field of view of the electronic device changes, the sending module may send a field of view switching request to a server, where the field of view switching request requests to play a VR scenario video through a second field of view. The VR scenario video created by the server includes M tile streams, and M is a positive integer. The receiving module may be configured to receive K tile streams from the server. The K tile streams are a tile stream that is in the M tile streams and that corresponds to the second field of view, and each of the K tile streams includes one video stream. It may be understood that the electronic device may play, based on the received K tile streams, a VR scenario video corresponding to the second field of view.

In a possible design of the sixth aspect, the sending module may further send a VR video request to the server, where the VR video request requests to play the VR scenario video through a first field of view. The receiving module may be further configured to receive N tile streams from the server, where the N tile streams are a tile stream that is in the M tile streams and that corresponds to the first field of view, and each of the N tile streams includes one video stream, so that the electronic device may play the VR scenario video based on the N tile streams through the first field of view. In another possible design of the sixth aspect, the electronic device may further include a determining module and a play module. When the field of view of the electronic device changes, the determining module may be configured to determine a timestamp at which the electronic device is playing a first video frame in the N tile streams, where the first video frame is a key frame or a predictive frame.

The play module may be specifically configured to determine, based on the timestamp and preset switching duration, to play a second video frame in the K tile streams, where the second video frame is a key frame or a predictive frame, so that the electronic device plays, starting from the second video frame, the VR scenario video based on the K tile streams through the second field of view.

In another possible design of the sixth aspect, the determining module is configured to determine a timestamp at which the electronic device is playing a first video frame in the N tile streams. The first video frame is a key frame or a predictive frame. The sending module may be configured to send the timestamp to the server. The timestamp is used to determine, with reference to the preset switching duration, that the server starts to send a second video frame in the K tile streams to the electronic device, and the second video frame is a key frame or a predictive frame.

In another possible design of the sixth aspect, the electronic device may further include an obtaining module. The second video frame is the predictive frame, and the obtaining module may be configured to obtain, from the server, a key frame in a GOP in which the second video frame is located.

In another possible design of the sixth aspect, the receiving module may be further configured to receive a low-resolution background stream, with a full field of view, of the VR scenario video from the server.

According to a seventh aspect, this application further provides an electronic device. The electronic device includes a memory, a display apparatus, and one or more processors. The memory and the display apparatus are coupled to the processor. The memory is configured to store computer program code, the computer program code includes computer instructions. When the processor executes the computer instructions, the electronic device is enabled to perform steps corresponding to the electronic device in any one of the first aspect and the possible designs of the first aspect, any one of the second aspect and the possible designs of the second aspect, and any one of the third aspect and the possible designs of the third aspect.

According to an eighth aspect, this application further provides a content delivery network CDN, and the CDN may include a plurality of servers. The server may include a memory, a display apparatus, and one or more processors. The memory and the display apparatus are coupled to the processor. The memory is configured to store computer program code, the computer program code includes computer instructions. When the processor executes the computer instructions, the server is enabled to perform steps corresponding to the CDN in any one of the first aspect and the possible designs of the first aspect, any one of the second aspect and the possible designs of the second aspect, and any one of the third aspect and the possible designs of the third aspect.

According to a ninth aspect, this application further provides a chip system. The chip system is used in an electronic device including a memory. The chip system includes one or more interface circuits and one or more processors. The interface circuit is interconnected to the processor through a line. The interface circuit is configured to receive a signal from the memory, and send the signal to the processor. The signal includes computer instructions stored in the memory. When the processor executes the computer instructions, the electronic device performs the method in any one of the first aspect and the possible designs of the first aspect, any one of the second aspect and the possible designs of the second aspect, and any one of the third aspect and the possible designs of the third aspect.

According to a tenth aspect, this application further provides a computer-readable storage medium, including computer instructions. When the computer instructions are run on a control device, the control device is enabled to perform the method in any one of the first aspect and the possible designs of the first aspect, any one of the second aspect and the possible designs of the second aspect, and any one of the third aspect and the possible designs of the third aspect. According to an eleventh aspect, this application further provides a computer program product. When the computer program product is run on a computer, the computer is enabled to perform the method in any one of the first aspect and the possible designs of the first aspect, any one of the second aspect and the possible designs of the second aspect, and any one of the third aspect and the possible designs of the third aspect.

It may be understood that for beneficial effects that can be achieved by the method in any one of the second aspect or the third aspect and the possible designs of the second aspect or the third aspect, any one of the fourth aspect and the possible designs of the fourth aspect, the server according to the fifth aspect, any one of the sixth aspect and the possible designs of the sixth aspect, the electronic device according to the seventh aspect, the content delivery network according to the eighth aspect, the chip system according to the ninth aspect, the computer-readable storage medium according to the tenth aspect, and the computer program product according to the eleventh aspect that are provided in this application, refer to beneficial effects in any one of the first aspect and the possible designs of the first aspect. Details are not described herein again.

### BRIEF DESCRIPTION OF DRAWINGS

FIG. 1 is a schematic diagram of creating a VR live video by an origin server in a TWS solution according to this application;
FIG. 2 is a schematic diagram of a structure of frames of a VR video stream according to an embodiment of this application;
FIG. 3 is a schematic diagram of a video stream downloaded and played when a VR head-mounted display device switches a field of view according to an embodiment of this application;
FIG. 4 is another schematic diagram of a video stream downloaded and played when a VR head-mounted display device switches a field of view according to an embodiment of this application;
FIG. 5 is another schematic diagram of a video stream downloaded and played when a VR head-mounted display device switches a field of view according to an embodiment of this application;
FIG. 6 is a schematic diagram of a hardware structure of an electronic device according to an embodiment of this application;
FIG. 7 is a schematic diagram of an application scenario according to an embodiment of this application;
FIG. 8 is a flowchart of a video processing method for a VR scenario according to an embodiment of this application;
FIG. 9 is a schematic diagram of a structure of frames of a tile stream in a VR video stream according to an embodiment of this application;
FIG. 10 is another schematic diagram of a video stream downloaded and played when a VR head-mounted display device switches a field of view according to an embodiment of this application;
FIG. 11 is another schematic diagram of a video stream downloaded and played when a VR head-mounted display device switches a field of view according to an embodiment of this application;
FIG. 12 is another schematic diagram of a video stream downloaded and played when a VR head-mounted display device switches a field of view according to an embodiment of this application;
FIG. 13 is another schematic diagram of a video stream downloaded and played when a VR head-mounted display device switches a field of view according to an embodiment of this application;
FIG. 14 is a schematic diagram of a structure of a system for displaying a VR live video according to an embodiment of this application;
FIG. 15 is a schematic diagram of a structure of modules of a server according to an embodiment of this application;
FIG. 16A is a schematic diagram of a structure of modules of an electronic device according to an embodiment of this application;
FIG. 16B is a schematic diagram of a structure of an electronic device according to an embodiment of this application; and
FIG. 17 is a schematic diagram of a structure of a chip system according to an embodiment of this application.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

The following explains terms in embodiments of this application.

Key frame (or referred to as an I-frame): The key frame is a picture generated by using an intra-frame encoding mode. To be specific, in an encoding process of the key frame, only a spatial correlation in a single frame picture is used, and a temporal correlation between the frame picture and another picture is not used.

A characteristic of the key frame is that intra-frame compression is used, and motion compensation is not used in picture compression. Because the encoding mode of the key frame is intra-frame encoding, decoding of the key frame does not depend on another frame in a group of pictures. Therefore, the key frame may be used as a randomly read and stored picture frame, to be specific, the decoding may start from the key frame at any time during decoding, or picture storage is performed by using the key frame as a start storage picture. In addition, because a compression ratio of the key frame is low, a key frame picture may appear in a picture sequence periodically, where a frequency at which the key frame appears may be selected by an encoder.

It should be noted that the encoding of the I-frame is the intra-frame encoding, to be specific, the encoding does not depend on the another frame in the group of pictures. The I-frame may be used to initialize a receiver or obtain a channel of the receiver. During video playing, video switching or insertion may also be processed by using the I -frame Instantaneous decoding refresh (Instantaneous Decoding Refresh, IDR) frame: A group of pictures including a plurality of groups of pictures may include a plurality of I-frames. During encoding and decoding, to distinguish between a plurality of I-frames in a video or a group of pictures, the 1^{st} I-frame is referred to as the IDR frame. In this way, picture encoding and decoding processes can be conveniently controlled. In other words, the IDR frame is also the I-frame.

A function of the IDR frame is to immediately refresh decoding, so that an error in a video picture is not propagated. For example, an IDR frame may be set within a preset quantity of frames in video frame setting, for example, an IDR frame is set every 250 frames in video encoding. Specifically, when a receiver receives the IDR frame, the receiver may clear a reference frame list (decoded picture buffer, DPB). Therefore, all I-frames after the IDR frame cannot reference content of a frame before the IDR frame.

Predictive frame (P-frame): An I-frame or another P-frame before the P-frame is used to perform inter-frame predictive encoding in a motion predictive mode. In other words, decoding of the P-frame depends on the previous I-frame. Alternatively, it may be understood that the P-frame is encoded by using a forward time predictive mode. This encoding mode can improve a compression ratio of a picture and picture quality.

The P-frame may include an intra-frame encoding part, to be specific, a code block in the P-frame may be obtained by using a forward predictive mode or an intra-frame encoding mode. In other words, the decoding of the P-frame may depend on a forward I-frame or a forward P-frame.

Bi-predictive picture (Bi-predictive picture, B-frame picture): Both a previous picture frame, which may be an I-frame or a P-frame, and a subsequent picture frame, such as a P-frame, are needed, and are encoded in a bidirectional time predictive mode. In other words, a B-frame picture uses a bidirectional time predictive mode. This compression mode can greatly improve a compression ratio of the B-frame picture.

In some possible application, because a future frame (namely, a picture frame after the B-frame) is used as a decoding reference for the B-frame picture, the future frame picture of the B-frame needs to be obtained first, so that the B-frame picture can be accurately decoded. For example, in a picture sequence including the B-frame, a transmission sequence and a display sequence of picture frames may be different.

Group of pictures GOP: The group of pictures is a group of continuous pictures, including one I-frame, a plurality of P-frames, and/or a plurality of B-frames. A larger quantity of pictures in the GOP indicates a better picture of a video corresponding to the GOP. The GOP may include an open GOP and a close GOP.

Open GOP: The open GOP indicates that a picture frame in the GOP depends on an I-frame or a P-frame in a previous GOP during decoding.

Close GOP: The close GOP indicates that a picture frame in the GOP can be totally decoded by the picture frame in the GOP without depending on a picture frame in a previous GOP.

Content delivery network (Content Delivery Network, CDN): The content delivery network is an intelligent virtual network constructed on an existing network. The CDN depends on an edge server (namely, a server close to a user equipment) deployed in each place. The server may enable a user to obtain needed content nearby by using functional modules such as load balancing, content delivery, and scheduling of a central platform. In this way, network congestion is reduced, and a user access response speed and a hit rate are improved.

Compared with a conventional television program or a live video, VR live streaming enables a viewer to feel immersive. In a process of displaying a VR scenario video, an origin server (or referred to as an origin server or an origin server computer) may create a VR scenario video with a full field of view based on an obtained VR shooting material, and the origin server may send the VR scenario video with a full field of view to a CDN. When an electronic device (namely, a VR head-mounted display device) sends a VR live streaming request to the CDN, the CDN sends, to the VR head-mounted display device in response to the VR live streaming request of the VR head-mounted display device, a VR live video corresponding to a field of view (or referred to as an angle of view). The VR head-mounted display device may display a received VR scenario video, so that a user wearing the VR head-mounted display device can watch the live VR scenario video.

It should be noted that although the VR head-mounted display device may display the VR scenario video with a full field of view, the VR head-mounted display device is worn by the user, and the VR head-mounted display device displays, for the user, only a VR scenario video within a range corresponding to the field of view. When the user turns the head, the VR head-mounted display device may detect that the field of view is switched, and obtain a switched field of view (for example, a second field of view), and the VR head-mounted display device displays a VR scenario video corresponding to the second field of view.

When the field of view of the VR head-mounted display device is switched from a first field of view to the second field of view, the VR scenario video displayed by the VR head-mounted display device needs to be switched from a VR scenario video corresponding to the first field of view to the VR scenario video corresponding to the second field of view. When displaying the VR scenario video, the VR head-mounted display device displays a low-resolution background video with a full field of view and a high-definition VR scenario video corresponding to the field of view of the VR head-mounted display device. Therefore, the user wearing the VR head-mounted display device performs a head turning action, so that the VR head-mounted display device detects field of view switching, and switches to a VR scenario video obtained after the field of view switching. In other words, starting from the head turning action of the user, the user may see the low-resolution background video obtained after the field of view switching. Further, when the user stops turning the head, the user may see the high-definition VR scenario video obtained after the field of view switching.

A time interval (Motion To High Resolution, MTHR) from displaying the low-resolution background video to switching to the high-definition VR scenario video by the VR head-mounted display device when the VR head-mounted display device detects that the user starts to turn the head is duration from displaying a low-quality picture to displaying a high-quality picture by the VR head-mounted display device from time at which the VR head-mounted display device detects that the user turns the head to time at which the VR head-mounted display device detects that the user stops turning the head. To ensure that the user does not feel dizzy after the VR scenario video displayed by the VR head-mounted display device is switched, the MTHR needs to be less than 200 ms (ms). If the VR head-mounted display device completes VR scenario video switching when the MTHR is less than 200 ms, a phenomenon of an instantaneous peak bit rate may occur during network transmission between the VR head-mounted display device and the CDN. In this case, even if the VR head-mounted display device and the CDN communicate with each other by using a 5G network, a phenomenon that it is difficult for the 5G network to bear a peak bit rate between the VR head-mounted display device and the CDN on a large scale may occur. It should be noted that a limit of human eye perception is about 80 ms. When the MTHR is 80 ms, time of the MTHR is even shorter. In other words, the VR head-mounted display device completes the VR scenario video switching within 80 ms. In this way, a higher transmission bit rate is caused between the VR head-mounted display device and the CDN.

Therefore, for application of the VR head-mounted display device, the VR head-mounted display device is worn by the user. After the field of view switching is detected, for how to reduce a transmission bit rate between the VR head-mounted display device and the CDN while ensuring a low MTHR latency (for example, less than 200 ms), implementations may be as follows:
In a first implementation, when creating a VR scenario video with a full field of view based on an obtained VR shooting material, an origin server may segment the created VR scenario video with a full field of view, and segment the VR scenario video with a full field of view into VR scenario videos with a plurality of preset fields of view. For example, the origin server creates the VR scenario video with a full field of view, and the origin server may segment the VR scenario video with a full field of view into VR scenario videos with 100 fields of view. Each field of view has a corresponding VR video stream. For example, if the field of view of the VR head-mounted display device is a first field of view, the VR head-mounted display device may display a first VR video stream corresponding to the first field of view, to play a VR scenario video corresponding to the first field of view.

It should be noted that each VR video stream includes two video sequences. FIG. 2 is a schematic diagram of a structure of a VR video stream according to an embodiment of this application. As shown in FIG. 2, the VR video stream includes two video sequences. One is a key frame sequence of all I-frames, and the other is a hybrid video frame sequence including key frames and predictive frames. A same time node may correspond to the key frame in the key frame sequence, and correspond to the predictive frame or the key frame in the hybrid video frame sequence. To be specific, in same play time, a VR head-mounted display device may display the key frame in the key frame sequence, or display the predictive frame or the key frame in the hybrid video frame sequence. As shown in FIG. 2, at a moment t1, the VR head-mounted display device displays an I3 frame in the key frame sequence and a P2 frame in the hybrid video frame sequence; and at a moment t2, the VR head-mounted display device displays an I4 frame in the key frame sequence and a P3 frame in the hybrid video frame sequence.

An application scenario including a VR head-mounted display device, a CDN, a streaming media management server, and a streaming server is used as an example. A specific process of using the VR head-mounted display device includes S1 to S17. Details are as follows:
S1: The streaming server obtains a VR scenario video with a full field of view and a preset quantity of fields of view, and segments, based on the quantity of fields of view, the VR scenario video with a full field of view into VR scenario videos corresponding to different fields of view.
S2: In correspondence to each field of view, the streaming server generates a corresponding VR video stream based on the VR scenario video with each field of view.

A structure of the VR video stream is the structure of the video stream shown in FIG. 2. To be specific, the VR video stream corresponds to the two video sequences, one is the key frame sequence of all I-frames, and the other is the hybrid video frame sequence including the key frames and the predictive frames. As shown in FIG. 2, a timestamp of a picture frame in the key frame sequence in a same position is the same as a timestamp of a picture frame in the hybrid video frame sequence in the same position. For example, timestamps of the I3 frame and the P2 frame corresponding to the moment t1 are the same, and timestamps of the I4 frame and the P3 frame corresponding to the moment t2 are the same.

S3: The streaming server may send the VR video stream corresponding to the field of view to the streaming media management server frame by frame.

To be specific, the streaming server may send the two video sequences in the VR video stream to the streaming media management server frame by frame, and send the VR video stream corresponding to the field of view to the streaming media management server.

S4: The streaming media management server sends the VR video stream corresponding to the field of view to the CDN frame by frame.

S5: The streaming media management server may further manage sending statuses of the key frame and the hybrid video frame in the VR video stream corresponding to the field of view. In other words, the streaming media management server may record a video frame sent to the CDN.

S6. The VR head-mounted display device may obtain an original field of view (namely, a first field of view) of a to-be-displayed VR scenario video, and send an access request to the CDN. The access request may include the first field of view.

S7: The CDN receives the access request sent by the VR head-mounted display device, and in response to the access request, the CDN may send a hybrid video frame sequence corresponding to the first field of view to the VR head-mounted display device.

S8: The VR head-mounted display device plays the hybrid video frame sequence corresponding to the first field of view, and displays, to a user, a VR scenario video corresponding to the first field of view.

S9: When detecting that a head posture of the user changes, the VR head-mounted display device may determine that the field of view of the VR head-mounted display device is switched. For example, the VR head-mounted display device switches from the first field of view to a second field of view.

S10: The VR head-mounted display device may generate, based on the current field of view (namely, the switched second field of view), a field of view switching request for switching to the second field of view, and send the field of view switching request to the CDN. The field of view switching request may include the second field of view.

S11: The CDN receives the field of view switching request from the VR head-mounted display device, and determines, in response to the field of view switching request, a corresponding VR video stream based on the second field of view in the field of view switching request.

S12: The CDN obtains a switching time point at which the first field of view is switched to the second field of view, where the switching time point is in a corresponding key frame sequence and a corresponding hybrid video frame sequence in the VR video stream corresponding to the second field of view. A time point in the second field of view corresponding to the switching time point is searched for, to obtain a play time point of the second field of view.

S13: A key frame for playing the VR video stream in the second field of view is obtained from a key frame in the key frame sequence corresponding to the second field of view based on the play time point of the second field of view. S14: The CDN sends the key frame for the VR video stream in the second field of view to the VR head-mounted display device.

S15: The VR head-mounted display device may replace the hybrid frame sequence corresponding to the first field of view with the key frame for playing.

S16: The CDN sequentially searches, in the hybrid frame video sequence corresponding to the second field of view, for one or more video frames in the VR video stream starting from a next video frame of a video frame that has a same time node as the key frame, and sequentially sends the found video frames in the VR video stream to the VR head-mounted display device.

S17: The VR head-mounted display device sequentially plays the video frames in the received VR video stream after playing the key frame.

It should be noted that the CDN may send, to the VR head-mounted display device, the VR video stream corresponding to the field of view of the VR head-mounted display device. When playing the VR scenario video corresponding to the first field of view, the VR head-mounted display device may play the hybrid frame video sequence in the VR video stream, to play the VR scenario video corresponding to the first field of view. When the field of view of the VR head-mounted display device is switched from the first field of view to the second field of view, the VR head-mounted display device may switch to the VR video stream corresponding to the second field of view by playing the key frame sequence in the VR video stream corresponding to the second field of view. After the switching is completed, the VR head-mounted display device plays the hybrid video frame sequence in the VR video stream corresponding to the second field of view.

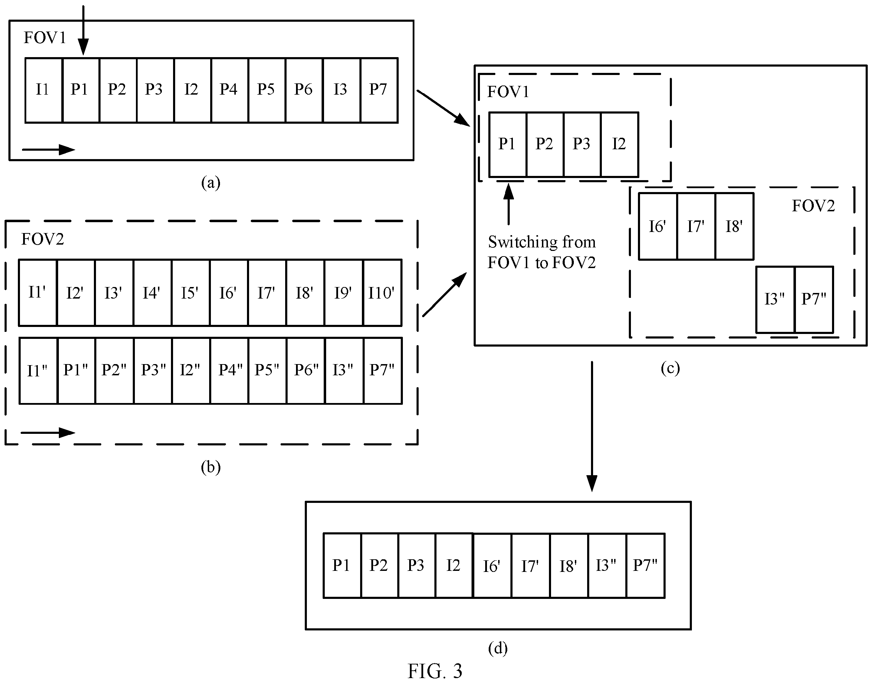

For example, a field of view of a VR head-mounted display device is switched from a first field of view FOV1 to a second field of view FOV2. FIG. 3 shows a VR video stream downloaded and played by the VR head-mounted display device in a process in which the VR head-mounted display device switches the field of view. (a) in FIG. 3 shows that the VR head-mounted display device plays a VR scenario video corresponding to FOV1, and the VR head-mounted display device plays a hybrid frame sequence in a VR video stream corresponding to FOV1. The VR head-mounted display device may sequentially play the hybrid frame sequence starting from an I1 frame. It is assumed that when playing a P1 frame, the VR head-mounted display device detects a head turning action of a user, and the VR head-mounted display device determines that the field of view is switched from FOV1 to FOV2.

It should be noted that, because the VR head-mounted display device detects that the head turning action of the user starts, and the head turning action of the user may not end, the VR head-mounted display device may continue to play the hybrid frame sequence in the VR video stream corresponding to FOV1. (b) in FIG. 3 shows a structure of a VR video stream that corresponds to FOV2 and that is to be played by the VR head-mounted display device. The VR video stream includes a key frame sequence and a hybrid frame sequence. (c) in FIG. 3 shows a video frame downloaded in a process in which the VR head-mounted display device switches from FOV1 to FOV2. The VR head-mounted display device currently plays the P1 frame. To ensure that pictures displayed by the VR head-mounted display device are continuous, the VR head-mounted display device may continue to download a P2 frame, a P3 frame, and an I2 frame in FOV1. The VR head-mounted display device may download, after downloading the I2 frame, a key frame sequence in the VR video stream corresponding to FOV2. The key frame sequence in the VR video stream corresponding to FOV2 needs to be downloaded based on a timestamp of the last downloaded frame (namely, the I2 frame) in the hybrid frame sequence in the VR video stream corresponding to FOV1. As shown in (c) in FIG. 3, the timestamp of the I2 frame corresponds to a timestamp of an I5' frame in the VR video stream corresponding to FOV2. Therefore, the VR head-mounted display device downloads key frames after the I5' frame, for example, an I6' frame, an I7' frame, and an I8' frame. After downloading the I6' frame, the I7' frame, and the I8' frame, the VR head-mounted display device completes field of view switching, to be specific, the VR head-mounted display device switches from the VR scenario video corresponding to FOV1 to a VR scenario video corresponding to FOV2. Therefore, after the I8' frame, the VR head-mounted display device may download an I3" frame in a hybrid frame sequence in the VR video stream corresponding to FOV2, and a picture frame after the I3" frame. (d) in FIG. 3 shows a video frame sequence played in a process in which the VR head-mounted display device switches from FOV1 to FOV2.

In this implementation, a streaming server has pre-divided, based on a quantity of fields of view, a VR scenario video with a full field of view into VR scenario videos corresponding to a plurality of fields of view. In a process of displaying the VR scenario video, the VR head-mounted display device requests to play the VR scenario video corresponding to the field of view. When the field of view of the VR head-mounted display device is switched, a CDN transmits a key frame of a switched field of view to the VR head-mounted display device. The VR head-mounted display device may first receive a plurality of consecutive key frames in the switched field of view. In this way, a phenomenon that the switching of the VR head-mounted display device is unsmooth may be caused.

In a process of the switching the field of view of the VR head-mounted display device, a plurality of I-frames corresponding to the second field of view are downloaded in a video frame switching process. As a result, a bit rate sent by the CDN to the VR head-mounted display device is excessively high, and a network transmission bit rate between the CDN and the VR head-mounted display device is increased. In addition, in the foregoing implementation, because each field of view has a corresponding video stream, after switching from an original field of view to the second field of view, the VR head-mounted display device displays a VR scenario video corresponding to the second field of view, and a phenomenon that pictures of the displayed VR scenario video are discontinuous may occur.

To avoid a phenomenon that the VR scenario video is discontinuous when the VR head-mounted display device switches a field of view, a TWS solution may be used. An origin server (or referred to as an origin server or an origin computer) may create a VR scenario video with a full field of view. The VR scenario video with a full field of view includes a low-resolution background stream and M tile streams, where M is a positive integer. A plurality of tile streams may form the VR scenario video with a full field of view. When playing the VR scenario video, the VR head-mounted display device may obtain N tile streams corresponding to a field of view, where N<M. A plurality of tile streams are spliced to form a VR scenario video corresponding to the field of view.

Specifically, the tile stream includes a plurality of slices, duration of each slice is fixed, and the slice includes a plurality of GOPs. Each GOP includes one I-frame and a plurality of P-frames.

In a second implementation, the origin server generates the VR scenario video by using the TWS solution. The origin server may generate a VR scenario video with a full field of view based on an obtained VR material. The VR scenario video with a full field of view includes a low-resolution background stream and M tile streams. The origin server may send a VR scenario video with a full field of view to a CDN network. The VR head-mounted display device may send a VR scenario video request to the CDN. The CDN sends N tile streams to the VR head-mounted display device in response to the VR scenario video request of the VR head-mounted display device. Therefore, the VR head-mounted display device can form, by using the N tile streams, a VR scenario video corresponding to a current field of view. In the M tile streams created by the origin server, each tile stream includes two video sequences. One is a long GOP video sequence (where a quantity of GOPs in a slice is small, for example, the slice contains only one GOP), and the other is a short GOP video sequence (where a quantity of GOPs in a slice is large, for example, the slice contains eight GOPs).

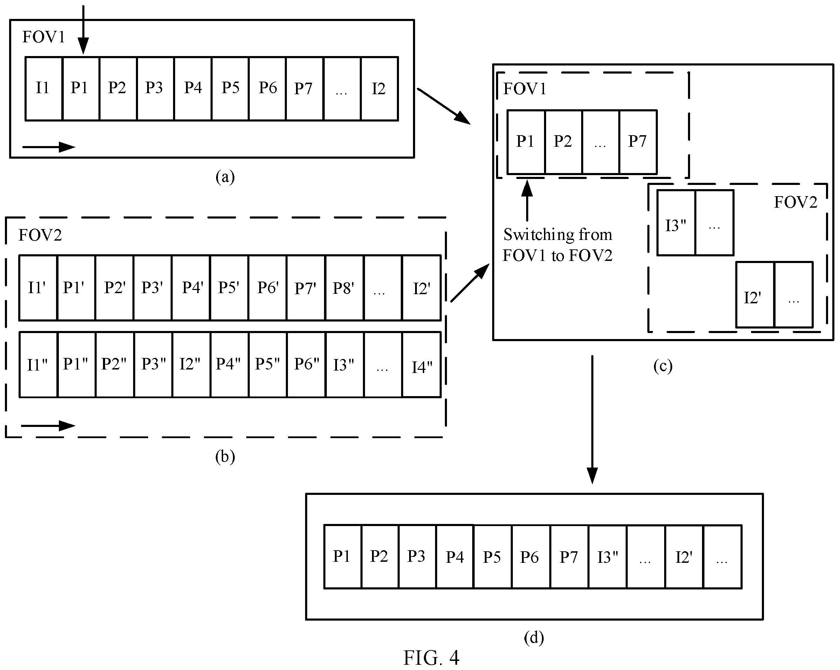

For example, a field of view of a VR head-mounted display device is switched from a first field of view FOV1 to a second field of view FOV2. FIG. 4 shows a VR video stream downloaded and played by the VR head-mounted display device in a process in which the VR head-mounted display device switches the field of view. (a) in FIG. 4 shows that the VR head-mounted display device plays a VR scenario video corresponding to FOV1, and the VR head-mounted display device plays a long GOP video sequence in the VR video stream corresponding to FOV1. The VR head-mounted display device may sequentially play the long GOP video sequence starting from an I1 frame. It is assumed that when playing a P1 frame, the VR head-mounted display device detects a head turning action of a user, and the VR head-mounted display device determines that the field of view is switched from FOV1 to FOV2. Because the VR head-mounted display device has started to display a picture in a GOP in which I1 is located, the VR head-mounted display device may perform switching after displaying P-frames of a preset quantity of frames in the GOP. For example, starting from the P1 frame to time after the VR head-mounted display device plays a P8 frame picture, the VR head-mounted display device plays a VR video stream corresponding to FOV2.

(b) in FIG. 4 shows a structure of a VR video stream that corresponds to FOV2 and that is to be played by the VR head-mounted display device. The VR video stream includes a long GOP video sequence and a short GOP video sequence. (c) in FIG. 4 shows a video frame downloaded in a process in which the VR head-mounted display device switches from FOV1 to FOV2. The VR head-mounted display device currently plays the P1 frame. To ensure that pictures displayed by the VR head-mounted display device are continuous, the VR head-mounted display device may continue to download a P2 frame, a P3 frame,..., and a P7 frame in FOV1. The VR head-mounted display device may download, after downloading the P7 frame, a short GOP video sequence in the VR video stream corresponding to FOV2. The short GOP video sequence in the VR video stream corresponding to FOV2 needs to be downloaded based on a timestamp of the last downloaded frame (namely, the P7 frame) in a hybrid frame sequence in the VR video stream corresponding to FOV1. As shown in (c) in FIG. 4, the timestamp of the P7 frame corresponds to the timestamp of an I3" frame in the VR video stream corresponding to FOV2. Therefore, the VR head-mounted display device downloads the I3" frame and a P-frame after the I3" frame. When downloading a plurality of P-frames after the I3" frame until an I4" frame, the VR head-mounted display device may download a long GOP video sequence of the VR video stream corresponding to FOV2. To be specific, the VR head-mounted display device downloads an I2' frame and a P-frame after the I2' frame starting from the I2' frame corresponding to a timestamp of the I4" frame. So far, the VR head-mounted display device completes field of view switching, to be specific, the VR head-mounted display device switches from the VR scenario video corresponding to FOV1 to a VR scenario video corresponding to FOV2.

(d) in FIG. 4 shows a video frame sequence played in a process in which the VR head-mounted display device switches from FOV1 to FOV2.

It should be noted that only one tile stream is used as an example to describe a process in which the VR head-mounted display device switches a field of view. The VR head-mounted display device needs to receive a plurality of tile streams, to form a VR scenario video corresponding to FOV2. A process shown in FIG. 4 may be performed for each tile stream in FOV2. Therefore, another tile stream switching process is not illustrated herein. It should be understood that if both FOV1 and FOV2 include a same tile stream, the switching process in FIG. 4 does not need to be performed for the same tile stream.

According to the foregoing schematic diagram, it can be learned from FIG. 4 that the VR head-mounted display device switches from the VR scenario video corresponding to FOV1 to the VR scenario video corresponding to FOV2, and the VR head-mounted display device downloads pictures of the P 1 frame to the P7 frame during MTHR. In other words, the VR head-mounted display device plays, starting from the I3" frame, the VR scenario video corresponding to FOV2. During the MTHR, the VR head-mounted display device downloads the seven frames. Based on a field test, when MTHR exceeds five frames, a user wearing a VR head-mounted display device may feel dizzy. Therefore, although this implementation can avoid a problem of discontinuous pictures caused by a change of a field of view, this implementation causes a user wearing a VR head-mounted display device to feel dizzy and reduces user experience.

When the VR head-mounted display device detects a head turning action of the user, to avoid the VR head-mounted display device from causing dizziness to the user in a process in which the VR head-mounted display device switches a VR scenario video corresponding to a field of view, a quantity of video frames in FOV1 played by the VR head-mounted display device during the MTHR can be reduced.

In a third implementation, an origin server generates a VR scenario video by using a TWS solution. In M tile streams created by the origin server, each tile stream includes two video sequences, one is a short GOP video sequence (where there are many GOPs in a slice, for example, the slice includes eight GOPs), and the other is an all I-frame video sequence.

The origin server may send the M tile streams to a CDN. When a VR head-mounted display device sends a VR video request to the CDN, the VR video request includes a current field of view (a first field of view) of the VR head-mounted display device. The CDN may send a plurality of tile streams corresponding to the first field of view to the VR head-mounted display device. The VR head-mounted display device receives the plurality of tile streams, and forms, based on a short GOP video sequence in the plurality of tile streams, a VR scenario video corresponding to the current field of view. When the field of view of the VR head-mounted display device is switched, the VR head-mounted display device may request the CDN to send an all I-frame video sequence in a tile stream in a switched field of view as a play video frame in a switching process. When a timestamp at which the VR head-mounted display device plays a video frame reaches a timestamp of an IDR frame, the VR head-mounted display device switches to a short GOP video sequence in a plurality of tile streams in the switched field of view, to form a VR scenario video corresponding to the field of view.

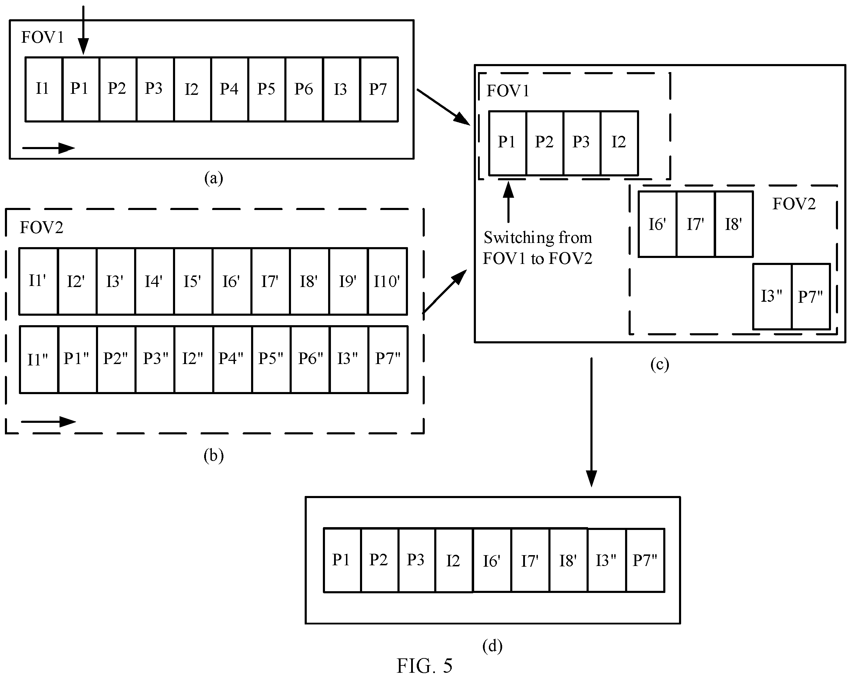

For example, a field of view of a VR head-mounted display device is switched from a first field of view FOV1 to a second field of view FOV2. FIG. 5 shows VR video frames downloaded and played by the VR head-mounted display device in a process in which the VR head-mounted display device switches the field of view. (a) in FIG. 5 shows that the VR head-mounted display device plays a VR scenario video corresponding to FOV1, and the VR head-mounted display device plays a short GOP video sequence in a VR video stream corresponding to FOV1 . The VR head-mounted display device may sequentially play the short GOP video sequence starting from an I1 frame. It is assumed that when playing a P1 frame, the VR head-mounted display device detects a head turning action of a user, and the VR head-mounted display device determines that the field of view is switched from FOV1 to FOV2. Because the VR head-mounted display device has started to display a picture in a GOP in which I1 is located, the GOP of the tile stream is a short GOP video sequence. The VR head-mounted display device may perform switching on an IDR frame that is in the GOP and that is after a GOP displaying a preset quantity of frames. For example, from the P1 frame to an I2 frame, the VR head-mounted display device plays the VR video stream corresponding to FOV1, and after the I2 frame, the VR head-mounted display device plays a VR video stream corresponding to FOV2.

(b) in FIG. 5 shows a structure of a VR video stream that corresponds to FOV2 and that is to be played by the VR head-mounted display device. The VR video stream includes a short GOP video sequence and an all I-frame video sequence. (c) in FIG. 5 shows a video frame downloaded in a process in which the VR head-mounted display device switches from FOV1 to FOV2. The VR head-mounted display device currently plays the P1 frame. To ensure that pictures displayed by the VR head-mounted display device are continuous, the VR head-mounted display device may continue to download a P2 frame, a P3 frame, and the I2 frame in FOV1. The VR head-mounted display device may download, after downloading the I2 frame, the all I-frame video sequence in the VR video stream corresponding to FOV2, and use the all I-frame video sequence as a transition video frame for playing an interrupted GOP video sequence in FOV2. The all I-frame video sequence in the VR video stream corresponding to FOV2 needs to be downloaded based on a timestamp of the last downloaded frame (namely, the I2 frame) in a hybrid frame sequence in the VR video stream corresponding to FOV1. As shown in (c) in FIG. 5, the timestamp of the I2 frame corresponds to a timestamp of an I5' frame in the VR video stream corresponding to FOV2. Therefore, the VR head-mounted display device downloads an i6' frame, an I7' frame, and an I8' frame that are after the I2 frame, and after the I8' frame, the VR head-mounted display device may download an IDR frame, namely, an I3" frame, in the short GOP video sequence in the tile stream. The VR head-mounted display device downloads, starting from the I3" frame, a picture frame after the I3" frame. So far, the VR head-mounted display device completes field of view switching, to be specific, the VR head-mounted display device switches from the VR scenario video corresponding to FOV1 to a VR scenario video corresponding to FOV2. (d) in FIG. 5 shows a video frame sequence played in a process in which the VR head-mounted display device switches from FOV1 to FOV2.

It should be noted that, in this solution, TWS is used, and the VR head-mounted display device does not fix a VR scenario video corresponding to a field of view. In this way, the VR head-mounted display device detects a head turning action of a user, and pictures corresponding to an angle of view displayed by the VR head-mounted display device are naturally continuous, so that user experience is better. However, in this implementation, in a field of view switching process, when FOV2 is switched to FOV2, first four frames that are in FOV2 and that are downloaded by the VR head-mounted display device are all key frames. In addition, a large data amount of the I-frames causes a large network transmission bit rate between the VR head-mounted display device and the CDN. Similarly, the origin server also transmits a tile stream including two streams to the CDN, so that a transmission bit rate between the origin server and the CDN increases.

Embodiments of this application provide a video processing method for a VR scenario. The method may be applied to a scenario in which an electronic device (for example, a VR head-mounted display device) plays a VR scenario video. A TWS solution may be used. When encoding a VR scenario video, the origin server reduces a bit rate of a tile stream in the VR scenario video. This reduces a transmission bit rate of a transmission network between the origin server and a CDN, and further reduces a transmission bit rate of a transmission network between the CDN and the electronic device. By using the TWS solution, the origin server may encode a plurality of tile streams corresponding to a full field of view. When a field of view of the electronic device is switched, the CDN may send a plurality of tile streams corresponding to a field of view of the VR head-mounted display device, so that pictures in a VR scenario video displayed by the electronic device are naturally continuous, to improve user experience.

For example, the electronic device in embodiments of this application may be a VR head-mounted display device, or the electronic device may be a mobile phone, a tablet computer, a desktop computer, a laptop computer, a handheld computer, a notebook computer, a vehicle-mounted device, an ultra-mobile personal computer (ultra-mobile personal computer, UMPC), a netbook, or a cellular phone. When the electronic device is a mobile phone, the electronic device needs to be used together with VR glasses. The mobile phone may receive a VR scenario video stream, and the VR glasses are configured to display a VR scenario video. In addition, the electronic device may alternatively be a personal digital assistant (personal digital assistant, PDA), an augmented reality (augmented reality, AR)/a virtual reality (virtual reality, VR) device, or the like. A specific form of the electronic device is not specially limited in embodiments of this application.

It may be understood that the video processing method for a VR scenario may be applied to environment simulation technologies such as free viewpoint video (free viewpoint video, FVV), virtual reality (Virtual Reality, VR), and augmented reality (augmented reality, AR).

For example, the electronic device displays a VR live video, or the electronic device displays a VR video. The electronic device obtains a video stream in a VR scenario in real time, and displays a corresponding VR scenario video to a user in real time. In this case, if the electronic device detects a head turning action of the user, the electronic device may provide naturally continuous VR scenario video pictures for the user in a head turning process of the user, and reduce a transmission bit rate of a transmission network between the electronic device and the CDN.

To clearly describe the technical solutions in this application and effects of the technical solutions, the following further describes this application with reference to the accompanying drawings and embodiments. It should be understood that the specific embodiments described herein are merely used to explain this application but are not intended to limit this application.

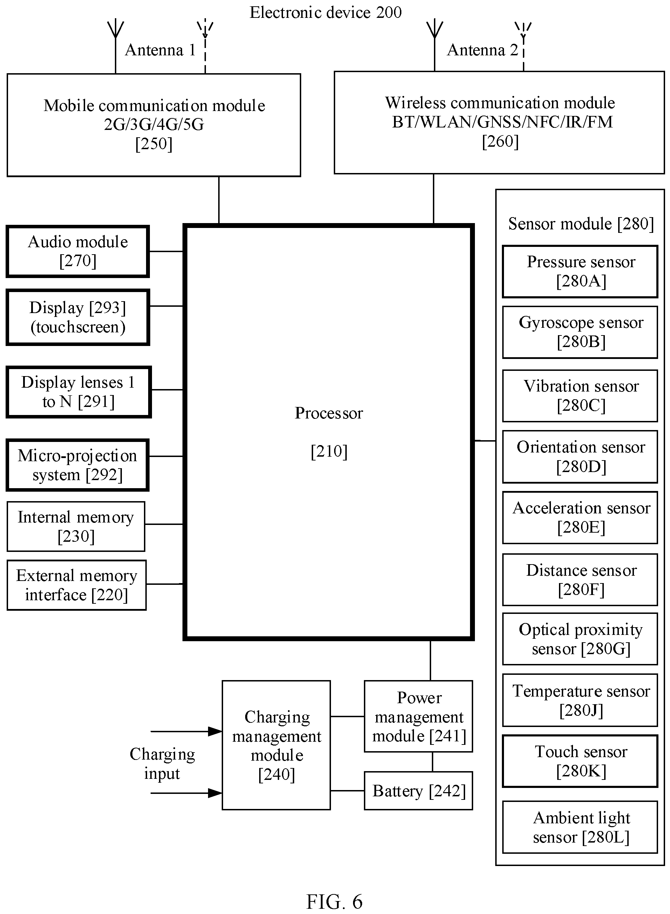

FIG. 6 is a schematic diagram of a structure of an electronic device 200 according to an embodiment of this application. As shown in FIG. 6, the electronic device 200 may include a processor 210, an external memory interface 220, an internal memory 230, a charging management module 240, a power management module 241, a battery 242, an antenna 1, an antenna 2, a mobile communication module 250, a wireless communication module 260, an audio module 270, a sensor module 280, a display lens 291, a micro-projection system 292, a display 293, and the like. The sensor module may include a pressure sensor 280A, a gyroscope sensor 280B, a vibration sensor 280C, an orientation sensor 280D, an acceleration sensor 280E, a distance sensor 280F, an optical proximity sensor 280G, a temperature sensor 280J, a touch sensor 280K, an ambient light sensor 280L, and the like.

It may be understood that the structure shown in this embodiment of the present invention does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 200. The controller may generate an operation control signal based on an instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and does not constitute a limitation on the structure of the electronic device 200. In some other embodiments of this application, the electronic device 200 may alternatively use an interface connection mode different from an interface connection mode in this embodiment, or a combination of a plurality of interface connection modes.

The external memory interface 220 may be configured to connect to an external storage card, for example, a Micro SD card, to extend a storage capability of the electronic device 200. The external storage card communicates with the processor 210 through the external memory interface 220, to implement a data storage function. For example, files such as music and videos are stored in the external storage card.

The internal memory 230 may be configured to store computer-executable program code. The executable program code includes instructions. The processor 210 performs various function applications of the electronic device 200 and data processing by running the instructions stored in the internal memory 230. The internal memory 230 may include a program storage area and a data storage area. The program storage area may store an operating system, an application needed by at least one function (for example, a sound playing function or an image playing function), and the like. The data storage area may store data (such as audio data and a phone book) created when the electronic device 200 is used, and the like. In addition, the internal memory 230 may include a high-speed random access memory, or may include a nonvolatile memory, for example, at least one magnetic disk storage device, a flash memory, or a universal flash storage (universal flash storage, UFS).

The charging management module 240 is configured to receive a charging input from a charger. The charger may be a wireless charger or a wired charger. The power management module 241 is configured to connect to the battery 242, the charging management module 240, and the processor 210. The power management module 241 receives input of the battery 242 and/or the charging management module 240, and supplies power to the processor 210, the internal memory 230, the external memory, the display 293, the wireless communication module 260, and the like.

A wireless communication function of the electronic device 200 may be implemented through the antenna 1, the antenna 2, the mobile communication module 250, the wireless communication module 260, the modem processor, the baseband processor, and the like.

The electronic device 200 may implement an audio function such as music play and recording by using the audio module 270, an application processor, and the like.

The mobile communication module 250 can provide a solution, applied to the electronic device 200, to wireless communication including 2G, 3G, 4G, 5G, or the like.

The wireless communication module 260 may provide a wireless communication solution applied to the electronic device 200 and including a wireless local area network (wireless local area network, WLAN) (for example, a wireless fidelity (Wireless Fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

The electronic device 200 implements a display function by using the GPU, the display 293, the application processor, and the like.

The display 293 is configured to display a picture, a video, or the like. The display 293 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a quantum dot light emitting diode (quantum dot light emitting diode, QLED), or the like. In some embodiments, the electronic device 200 may include one or N displays 293, where N is a positive integer greater than 1.

The display lens 291 may include a left-eye display lens and a right-eye display lens. The display lens may include two lenses, and the lens may be a convex lens. For example, a lens surface may be designed as a flat-convex structure, a doubly convex structure, or a concave-convex structure. It may be understood that the convex lens can correct a light source angle of a lens, so that human eyes re-read, to increase an angle of view, magnify a picture, and enhance a stereoscopic sense, and make a person feel immersive.

The micro-projection system 292 is configured to obtain a VR scenario video, and project the VR scenario video on the display 293, to display the VR scenario video for a user.

The pressure sensor 280A is configured to sense a pressure signal, and may convert the pressure signal into an electrical signal. The gyroscope sensor 280B may be configured to determine a motion posture of the electronic device 200. The vibration sensor 280C may be configured to determine the motion status of the electronic device 200. The orientation sensor 280D may be configured to sense a magnitude of an inertia force of the electronic device 200 in a direction and measure acceleration and gravity of the electronic device 200 in the direction.

The acceleration sensor 280E may detect magnitudes of accelerations in various directions (usually on three axes) of the electronic device 200, and may detect a magnitude and a direction of the gravity when the electronic device 200 is still. The acceleration sensor 280E may be further configured to identify a posture of the electronic device, and is used in an application such as switching between a landscape mode and a portrait mode or a pedometer.

The distance sensor 280F is configured to measure a distance. The electronic device 200 may measure the distance through infrared or laser. In some embodiments, in a shooting scenario, the electronic device 200 may perform ranging by using the distance sensor 280F to implement fast focusing.

The optical proximity sensor 280G may include a light emitting diode (LED) and an optical detector, for example, a photodiode. The light emitting diode may be an infrared light emitting diode. The electronic device 200 emits infrared light by using the light emitting diode. The electronic device 200 detects infrared reflected light from a nearby object by using the photodiode. When detecting sufficient reflected light, the electronic device 200 may determine that there is an object near the electronic device 200. When detecting insufficient reflected light, the electronic device 200 may determine that there is no object near the electronic device 200.

The temperature sensor 280J is configured to detect a temperature. In some embodiments, the electronic device 200 executes a temperature processing policy by using the temperature detected by the temperature sensor 280J.

The touch sensor 280K is also referred to as a "touch panel". The touch sensor 280K may be disposed on the display 293. The touch sensor 280K and the display 293 constitute a touchscreen, which is also referred to as a "touch-control screen".

The ambient light sensor 280L is configured to sense ambient light luminance. The electronic device 200 may adaptively adjust luminance of the display 293 based on the sensed ambient light luminance.

All of the following embodiments may be implemented in an electronic device having the foregoing hardware structure. In embodiments of this application, an example in which an electronic device is a VR head-mounted display device and the VR head-mounted display device is configured to play a VR live video is used, to describe the video processing method for a VR scenario provided in this application.

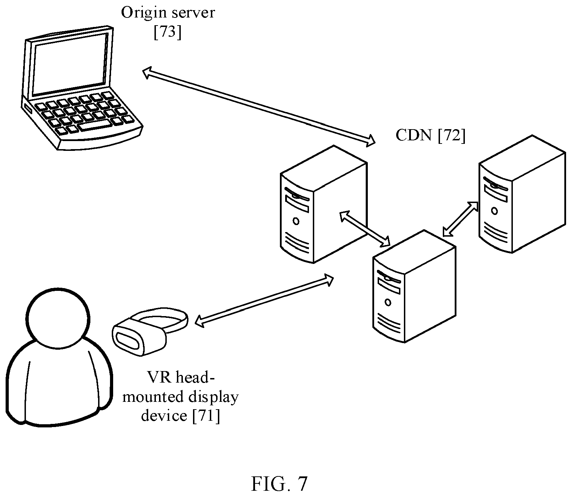

FIG. 7 is a schematic diagram of an application scenario of a video processing method for a VR scenario according to an embodiment of this application. As shown in FIG. 7, the application scenario includes a VR head-mounted display device 71, a CDN 72, and an origin server 73. The VR head-mounted display device 71 may be referred to as a VR end device, the origin server 73 may be an origin server computer or an encoding apparatus, the CDN 72 is a content delivery network including a plurality of servers, and the CDN 72 may also be referred to as a distribution apparatus. In a process in which the VR head-mounted display device 71 displays a VR live video, the origin server 73 may obtain a VR live streaming material, and create a VR scenario video with a full field of view based on the obtained the VR live streaming material. The CDN 72 may receive a VR video request of the VR head-mounted display device 71, so that the CDN 72 requests to obtain a VR scenario video in the VR video request from the origin server 73. The origin server 73 may send the VR scenario video with a full field of view to the CDN 72, and the CDN 72 may send, to the VR head-mounted display device based on a field of view in the VR video request, the VR scenario video corresponding to the field of view of the VR head-mounted display device.

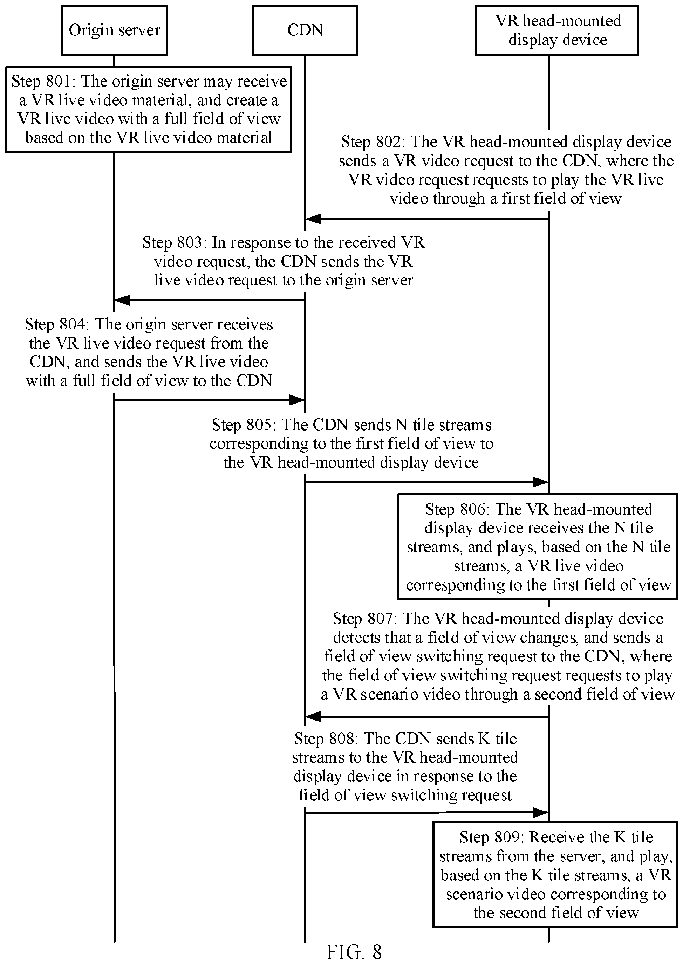

Specifically, FIG. 8 is a flowchart of a video processing method for a VR scenario according to an embodiment of this application. The method includes step 801 to step 809. The method in this embodiment of this application may be applied to the application scenario shown in FIG. 7.

Step 801: An origin server may receive a VR live video material, and create a VR live video with a full field of view based on the VR live video material.

The VR scenario video includes a low-resolution background stream with a full field of view and M tile streams, and the M tile streams may form the VR live video with a full field of view.

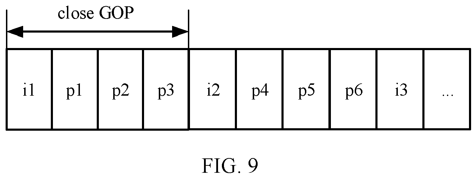

It should be noted that each of the M tile streams includes one video stream, and M is a positive integer. One video stream may be formed by slices (Slices) with fixed duration, each slice may include a plurality of GOPs, and each GOP may include a key frame and X predictive frames after the key frame, where X≥2, and X is a positive integer. For example, FIG. 9 is a schematic diagram of a structure of a slice according to an embodiment of this application. A plurality of slices may form one video stream (namely, one tile stream). Therefore, the plurality of slices combined together may be referred to as the tile stream. As shown in FIG. 9, predictive frames p1, p2, and p3 after a key frame i1 and i1 are in one GOP. Intra-frame decoding may be performed on i1, and reference needs to be made to the i1 frame to perform decoding of p1, p2, and p3. In some embodiments, reference is made only to the i1 frame to perform the decoding of p1, p2, and p3. In some other embodiments, reference may be made to the i1 frame and a P-frame to perform the decoding of p1, p2, and p3. For example, reference needs to be made to the i1 frame and the p2 frame to perform the decoding of the p3 frame. If reference needs to be made to the i1 frame and the p2 frame to perform the decoding of the p3 frame, when it is determined that the p3 frame is used as a start frame to play a tile stream, the p3 frame, the i1 frame, and the p2 frame may be sent to a VR head-mounted display device, so that the VR head-mounted display device can decode the p3 frame based on the i1 frame and the p2 frame, and play, by using the p3 frame as the start frame, a picture corresponding to the tile stream.

It may be understood that, as shown in FIG. 9, the GOP includes three predictive frames. In actual application, the GOP may include another quantity of predictive frames. For example, the GOP may include three predictive frames, six predictive frames, or eight predictive frames after a key frame.

In a possible implementation, when GOPs in the slices are encoded, all the GOPs in the slices may be encoded as close GOPs.

When a user wears the VR head-mounted display device to watch the VR live video, because a line-of-sight range of human eyes is limited, the VR head-mounted display device can display a VR live video in a current line-of-sight range of the user to satisfy a user requirement. The VR head-mounted display device may determine a displayed field of view based on data of a sensor, and request a VR scenario video in a range of the field of view. The VR head-mounted display device may determine the current field of view based on data of a gyroscope sensor and an orientation sensor. It may be understood that when the user wearing the VR head-mounted display device performs a head turning action, the sensor of the VR head-mounted display device may detect the head turning action of the user. For example, the VR head-mounted display device may detect the head turning action of the user based on the data of the gyroscope sensor and the orientation sensor.

It should be noted that the origin server generates the low-resolution background stream and the M tile streams based on a VR live streaming material. It is assumed that the VR head-mounted display device may obtain, from the origin server, a plurality of tile streams corresponding to a first field of view, and the VR head-mounted display device may splice video frames in the plurality of tile streams to form a VR live video corresponding to the first field of view. A manner in which the origin server creates the VR live video is TWS. When the VR head-mounted display device detects the head turning action of the user, the VR head-mounted display device may send, to the server, a request for obtaining a plurality of tile streams corresponding to a VR live video after the VR head-mounted display device switches the field of view. The VR head-mounted display device forms, by using the tile streams, the VR live video corresponding to a field of view. In a process in which the VR head-mounted display device detects that the user performs the head turning action and switches from the first field of view to a second field of view, a picture is smooth, to improve user experience.

For example, the origin server may evenly segment a high-resolution VR live video with a full field of view into the M tile streams, or the origin server may unevenly segment the high-resolution VR live video with a full field of view into the M tile streams. In other words, this embodiment of this application does not specifically limit a manner in which the origin server segments the high-resolution VR live video with a full field of view.

Step 802: The VR head-mounted display device sends a VR video request to a CDN, where the VR video request requests to play the VR live video through the first field of view.

It may be understood that the origin server receives the VR video request of the CDN, and the origin server may send, to the CDN frame by frame, video streams in the M tile streams corresponding to the encoded VR live video. When the origin server encodes the VR live video, each tile stream corresponds to one video stream. Compared with a solution in which each tile stream corresponds to two video streams, this solution reduces transmission pressure between the origin server and the CDN network.

The CDN may include a plurality of servers, and the CDN is configured to send the VR live video to the VR head-mounted display device. The CDN enables the user to obtain needed content nearby, to be specific, the VR head-mounted display device may send the VR video request to a server in a nearest CDN. In this way, network congestion can be reduced, and a user access response speed and a hit rate can be improved.

The VR head-mounted display device sends the VR video request to the CDN, where the VR video request includes a current field of view (namely, the first field of view) of the VR head-mounted display device, so that the CDN can send a VR scenario video corresponding to the first field of view to the VR head-mounted display device.

It should be noted that the first field of view is an angle value corresponding to a range of a field of view that can be provided by the VR head-mounted display device for the user, and the first field of view is not an angle value corresponding to a range of a field of view that can be seen by eyes of the user. Different VR head-mounted display devices may provide different ranges of a field of view. For example, the field of view of the VR head-mounted display device may be 120°, 100°, or 90°.

Step 803: In response to the received VR video request, the CDN sends the VR video request to the origin server.

The CDN may serve a plurality of VR head-mounted display devices. When the VR head-mounted display device requests to obtain the VR live video, the CDN sends the VR video request to the origin server in response to the VR video request of the VR head-mounted display device. Therefore, the CDN may obtain the VR live video from the origin server, and the CDN may send the VR scenario video to the VR head-mounted display device in response to the VR video request of the VR head-mounted display device.

It may be understood that, before the VR head-mounted display device sends the VR video request to the CDN, if another electronic device served by the CDN requests to obtain the VR live video, the CDN directly sends the obtained VR live video to the VR head-mounted display device. In other words, if the CDN has requested to obtain the VR scenario video from the origin server, the CDN obtains the VR video request of the VR head-mounted display device, and directly sends the VR live video corresponding to the field of view of the VR head-mounted display device to the VR head-mounted display device. In this case, step 803 may not be performed.

Step 804: The origin server receives the VR video request from the CDN, and sends the VR live video with a full field of view to the CDN.

It may be understood that the origin server sends the VR live video with a full field of view to the CDN, and the VR live video with a full field of view includes the low-resolution background stream and the M tile streams. The M tile streams may form a high-resolution VR video picture with a full field of view. Because the CDN may serve the plurality of VR head-mounted display devices, fields of view in VR video requests sent by the plurality of VR head-mounted display devices may be different. The origin server sends the VR live video with a full field of view to the CDN. In this way, when the VR head-mounted display device sends the VR video request to the CDN, the CDN may send, based on the field of view of the VR video request, the VR live video corresponding to the field of view to the corresponding VR head-mounted display device.

The CDN may send the VR video request to the origin server, where the VR video request requests to obtain the VR live video with a full field of view. In response to the VR video request of the VR head-mounted display device, the CDN may send the VR live video corresponding to the field of view to the VR head-mounted display device.

Step 805: The CDN sends N tile streams corresponding to the first field of view to the VR head-mounted display device.

The N tile streams are a tile stream that is in the M tile streams in the server and that corresponds to the first field of view, and N is a positive integer.

The VR head-mounted display device may generate, based on the N tile streams, the VR live video corresponding to the first field of view. It may be understood that the CDN may further send the low-resolution background stream to the VR head-mounted display device, and the VR head-mounted display device may display, on the low-resolution background stream, a high-resolution video generated by the N tile streams, to form a high-resolution VR live video. Step 806: The VR head-mounted display device receives the N tile streams, and plays, based on the N tile streams, the VR live video corresponding to the first field of view.

When displaying the VR live video corresponding to the first field of view, the VR head-mounted display device may display the low-resolution background stream with a full field of view, and display, in an overlay manner on the low-resolution background stream, a live video formed by N high-quality picture tile streams, so that the user wearing the VR head-mounted display device watches the VR live video corresponding to the first field of view.

Step 807: The VR head-mounted display device detects that the field of view changes, and sends a field of view switching request to the CDN, where the field of view switching request requests to play the VR scenario video through the second field of view.

For example, the VR head-mounted display device may detect the head turning action of the user based on the data of the gyroscope sensor and the orientation sensor, to determine that the field of view of the VR head-mounted display device changes. The VR head-mounted display device may send the field of view switching request to the CDN based on a change degree of the field of view. The field of view switching request may include the second field of view, so that the CDN can send a VR live video corresponding to the second field of view to the VR head-mounted display device.

It should be noted that, because the VR scenario video corresponding to the second field of view is different from the VR scenario video corresponding to the first field of view, and the field of view switching request includes the second field of view, the CDN can determine a plurality of tile streams in the VR scenario video based on the second field of view. Alternatively, the second field of view in the field of view switching request is the plurality of tile streams corresponding to the VR scenario video with the second field of view. In other words, the field of view switching request includes an identifier of the plurality of tile streams corresponding to the VR scenario video with the second field of view and a frame sequence number of a second video frame corresponding to K tile streams.

Step 808: The CDN sends the K tile streams to the VR head-mounted display device in response to the field of view switching request.

The K tile streams are a tile stream that is in the M tile streams in the server and that corresponds to the second field of view, each of the K tile streams includes one video stream, and K is a positive integer.

It may be understood that before receiving the K tile streams, the VR head-mounted display device plays the VR live video formed by the N tile streams corresponding to the first field of view. When the CDN receives the field of view switching request, the CDN may send the K tile streams corresponding to the second field of view to the VR head-mounted display device, or the CDN may preset switching duration of the VR head-mounted display device, and send the K tile streams to the VR head-mounted display device based on the preset switching duration.

For example, the CDN may obtain a timestamp at which the VR head-mounted display device is playing a first video frame in the N tile streams, and the CDN determines the second video frame in the K tile streams based on the timestamp and preset switching duration. The CDN may send the K tile streams to the VR head-mounted display device starting from the second video frame. The first video frame is a video frame in N tile streams being played by the VR head-mounted display device. For example, the slice shown in FIG. 9 is a slice being played by the VR head-mounted display device, and the VR head-mounted display device is currently displaying p1. Therefore, p1 is the first video frame, and a timestamp of p1 is a timestamp at which the VR head-mounted display device is playing a VR live video. It may be understood that, the second video frame in the K tile streams may be an I-frame or a P-frame.

In the foregoing example, after receiving the field of view switching request from the VR head-mounted display device, the CDN obtains, before preset switching time, the timestamp at which the VR head-mounted display device is playing the first video frame in the N tile streams. The CDN determines, based on the timestamp and the preset switching duration, a timestamp at which the VR head-mounted display device plays the second video frame in the K tile streams corresponding to the second field of view. Further, the CDN sends the K tile streams corresponding to the second field of view to the VR head-mounted display device.

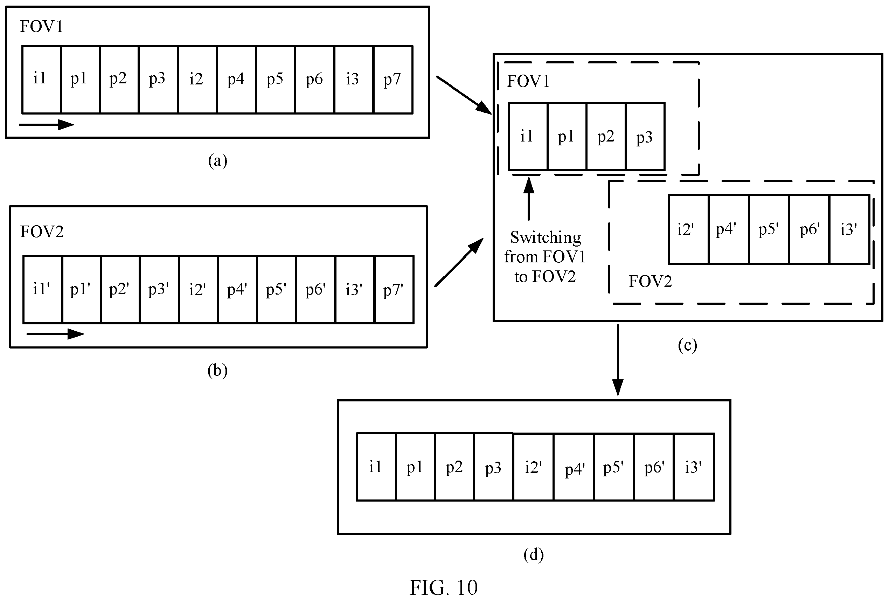

For example, refer to FIG. 10. A process in which a CDN sends a tile stream is used as an example. FIG. 10 is a schematic diagram of video frames sent by the CDN to a VR head-mounted display device after the VR head-mounted display device sends a field of view switching request to the CDN. (a) in FIG. 10 is a schematic diagram in which the VR head-mounted display device plays a VR scenario video corresponding to FOV1, and the VR head-mounted display device plays a video stream of a tile stream corresponding to FOV1. The VR head-mounted display device may sequentially play a hybrid frame sequence starting from an i1 frame. It is assumed that when playing the i1 frame, the VR head-mounted display device detects a head turning action of a user, and the VR head-mounted display device determines that a field of view is switched from FOV1 to FOV2. (b) in FIG. 10 is a schematic diagram in which the VR head-mounted display device plays a VR scenario video corresponding to FOV2, and the VR head-mounted display device plays the video stream of the tile stream corresponding to FOV2. The CDN may obtain a timestamp at which the VR head-mounted display device currently plays i 1. It is assumed that preset switching duration corresponds to duration for playing four picture frames by the VR head-mounted display device, in other words, a second video frame in K tile streams is an i2' frame. The CDN may continue to send a p1 frame, a p2 frame, and a p3 frame to the VR head-mounted display device. After the p3 frame, the VR head-mounted display device may play a VR live video corresponding to the second field of view. The CDN sends the i2' frame to the VR head-mounted display device. (c) in FIG. 10 shows the video frames sent by the CDN to the VR head-mounted display device when the VR head-mounted display device switches from FOV1 to FOV2. (d) in FIG. 10 shows a video frame sequence played in a process in which the VR head-mounted display device switches from FOV1 to FOV2.

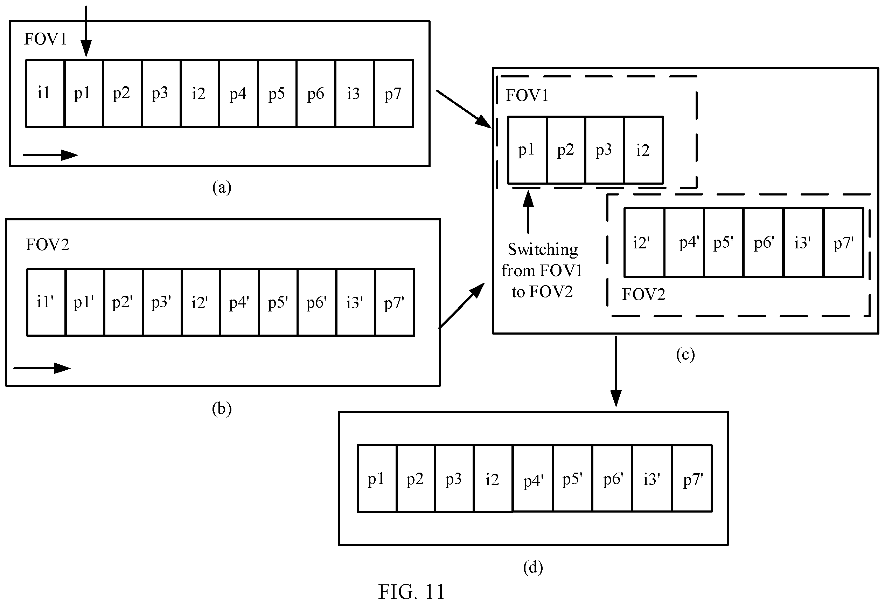

For another example, refer to FIG. 11. A process in which a CDN sends a tile stream is used as an example. FIG. 11 is a schematic diagram of video frames sent by the CDN to a VR head-mounted display device after the VR head-mounted display device sends a field of view switching request to the CDN. (a) in FIG. 11 is a schematic diagram in which the VR head-mounted display device plays a VR scenario video corresponding to FOV1, and the VR head-mounted display device plays a video stream of a tile stream corresponding to FOV1. The VR head-mounted display device may sequentially play a hybrid frame sequence starting from an i1 frame. It is assumed that when playing a p1 frame, the VR head-mounted display device detects a head turning action of a user, and the VR head-mounted display device determines that a field of view is switched from FOV1 to FOV2. (b) in FIG. 11 is a schematic diagram in which the VR head-mounted display device plays a VR scenario video corresponding to FOV2, and the VR head-mounted display device plays the video stream of the tile stream corresponding to FOV2. The CDN may obtain a timestamp at which the VR head-mounted display device currently plays p1. It is assumed that preset switching duration corresponds to duration for playing four picture frames by the VR head-mounted display device, in other words, a second video frame in K tile streams is a p4 frame. The CDN may continue to send a p3 frame and an i2 frame to the VR head-mounted display device. After the i2 frame, the VR head-mounted display device may play a VR live video corresponding to the second field of view. The CDN sends a p5' frame to the VR head-mounted display device. Because decoding of the p5' frame depends on an i2' frame, the CDN sends the i2' frame to the VR head-mounted display device. (c) in FIG. 11 shows the video frames sent by the CDN to the VR head-mounted display device when the VR head-mounted display device switches from FOV1 to FOV2. (d) in FIG. 11 shows a video frame sequence played in a process in which the VR head-mounted display device switches from FOV1 to FOV2.

A P-frame in a GOP is obtained in a forward encoding mode, in other words, the P-frame in the GOP needs to depend on an I-frame in the GOP during decoding. Therefore, if the second video frame is a P-frame, the CDN needs to send an I-frame in a GOP in which the P-frame is located to the VR head-mounted display device. If the second video frame is an I-frame, the CDN sends the K tile streams corresponding to the second field of view to the VR head-mounted display device by using the I-frame as a start frame.

It should be noted that, in the video stream of the tile stream shown in (b) in FIG. 10, a p4' frame further exists between the p5' frame and the i2' frame. Because the VR head-mounted display device may start playing from the p5' frame, the CDN may send the p5' frame after sending the i2' frame to the VR head-mounted display device.

The preset switching duration is related to execution time of performing transmission, data decapsulation, data decoding, and picture frame rendering when the VR head-mounted display device plays the VR live video. For example, it is assumed that the execution time of performing transmission, data decapsulation, data decoding, and picture frame rendering is t when the VR head-mounted display device plays the VR live video, and time of playing, by the VR head-mounted display device, the VR live video corresponding to the second field of view may be determined by adding t to the timestamp at which the VR head-mounted display device currently plays the first video frame.

t may be an empirical value. t may also be related to an encoding parameter in the tile stream, for example, a frame rate in tile stream encoding. This is merely an example, and a value of t is not specifically limited.

Step 809: The K tile streams from the server are received, and based on the K tile streams, the VR scenario video corresponding to the second field of view is played.

When displaying the VR live video corresponding to the second field of view, the VR head-mounted display device may display the low-resolution background stream with a full field of view, and display, in an overlay manner on the low-resolution background stream, a live video formed by K high-quality picture tile streams, so that the user wearing the VR head-mounted display device watches the VR live video corresponding to the second field of view.

It should be understood that, in the foregoing example, there are descriptions indicating that the CDN may control sending of the switched video frame to the VR head-mounted display device. In another implementation, the CDN may send, to the VR head-mounted display device in time in response to the field of view switching request, one or more tile streams corresponding to the second field of view. The VR head-mounted display device may perform switching based on the received K tile streams in the second field of view, to switch the played VR live video. Specifically, it is assumed that a structure of the tile stream sent by the CDN is shown in FIG. 9, and that one GOP includes one I-frame and three P-frames is used as an example. If the VR head-mounted display device detects that the field of view is switched at different moments, a phenomenon of frame skipping downloading may occur in a video frame downloaded by the VR head-mounted display device. Refer to the following examples. Each example indicates video frames downloaded by the VR head-mounted display device when the VR head-mounted display device detects that the field of view is switched in an I-frame and a P-frame in the GOP.

In a first example, a schematic diagram of the video frames sent by the CDN to the VR head-mounted display device shown in FIG. 10 is still used as an example. (a) in FIG. 10 is a schematic diagram in which the VR head-mounted display device plays a VR scenario video corresponding to FOV1, and the VR head-mounted display device plays a video stream of a tile stream corresponding to FOV1. The VR head-mounted display device may sequentially play a hybrid frame sequence starting from an i1 frame. It is assumed that when playing the i1 frame, the VR head-mounted display device detects a head turning action of a user, and the VR head-mounted display device determines that a field of view is switched from F O V 1 to FOV2. (b) in FIG. 10 is a schematic diagram in which the VR head-mounted display device plays a VR scenario video corresponding to FOV2, and the VR head-mounted display device plays the video stream of the tile stream corresponding to FOV2. When the CDN receives a field of view switching request sent by the VR head-mounted display device, because a timestamp of the i1 frame is the same as a timestamp of an i1' frame, the CDN sends the i1 frame to the VR head-mounted display device. The VR head-mounted display device determines, based on the timestamp of the i1 frame and preset switching duration, to use an i2' frame as a start play frame in the second field of view. (c) in FIG. 10 shows the video frames downloaded by the VR head-mounted display device from the CDN when the VR head-mounted display device switches from FOV1 to FOV2. The VR head-mounted display device may download the i2' frame, a p4' frame, and a p5' frame. (d) in FIG. 10 shows a video frame sequence played in a process in which the VR head-mounted display device switches from FOV1 to FOV2.

In a second example, a schematic diagram of the video frames sent by the CDN to the VR head-mounted display device shown in FIG. 11 is still used as an example. (a) in FIG. 11 is a schematic diagram in which the VR head-mounted display device plays a VR scenario video corresponding to FOV1, and the VR head-mounted display device plays a video stream of a tile stream corresponding to FOV1. The VR head-mounted display device may sequentially play a hybrid frame sequence starting from an i1 frame. It is assumed that when playing the p1 frame, the VR head-mounted display device detects a head turning action of a user, and the VR head-mounted display device determines that a field of view is switched from FOV1 to FOV2. (b) in FIG. 11 is a schematic diagram in which the VR head-mounted display device plays a VR scenario video corresponding to FOV2, and the VR head-mounted display device plays the video stream of the tile stream corresponding to FOV2. When the CDN receives a field of view switching request sent by the VR head-mounted display device, the CDN sends the video stream of the tile stream corresponding to FOV2 to the VR head-mounted display device by using an IDR frame in a GOP in which the p1 frame is located as a start frame. The VR head-mounted display device determines, based on a timestamp of the p1 frame and preset switching duration, to use a p4' frame as a start play frame in the second field of view. (c) in FIG. 11 shows the video frames downloaded by the VR head-mounted display device from the CDN when the VR head-mounted display device switches from FOV1 to FOV2. The VR head-mounted display device may download an i2' frame, a p4' frame, and a p5' frame. (d) in FIG. 11 shows a video frame sequence played in a process in which the VR head-mounted display device switches from FOV1 to FOV2.

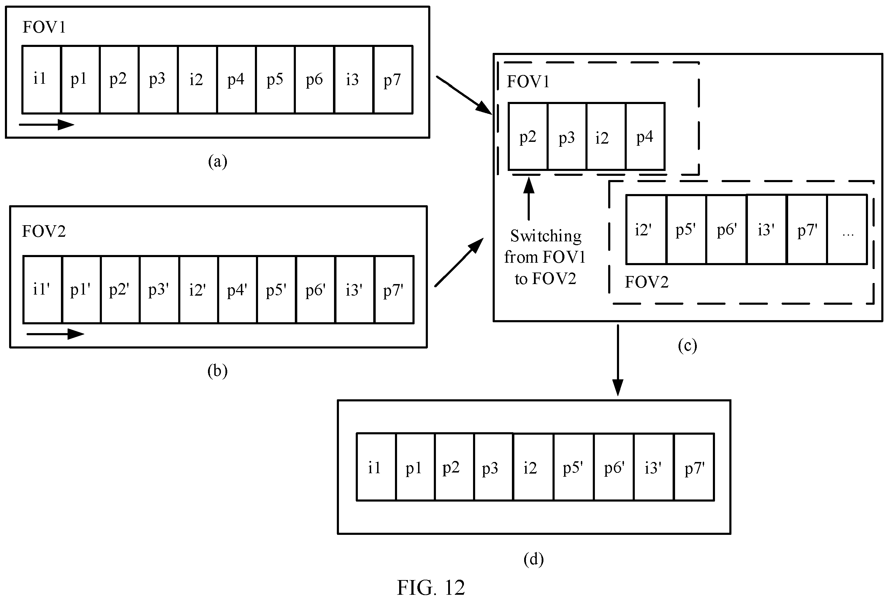

In a third example, refer to FIG. 12. A process in which a CDN sends a tile stream is used as an example. FIG. 12 is a schematic diagram of video frames sent by the CDN to a VR head-mounted display device after the VR head-mounted display device sends a field of view switching request to the CDN. (a) in FIG. 12 is a schematic diagram in which the VR head-mounted display device plays a VR scenario video corresponding to FOV1, and the VR head-mounted display device plays a video stream of a tile stream corresponding to FOV1. The VR head-mounted display device may sequentially play a hybrid frame sequence starting from an i1 frame. It is assumed that when playing the p2 frame, the VR head-mounted display device detects a head turning action of a user, and the VR head-mounted display device determines that a field of view is switched from FOV1 to FOV2. (b) in FIG. 12 is a schematic diagram in which the VR head-mounted display device plays a VR scenario video corresponding to FOV2, and the VR head-mounted display device plays the video stream of the tile stream corresponding to FOV2. When the CDN receives the field of view switching request sent by the VR head-mounted display device, the CDN sends the video stream of the tile stream corresponding to FOV2 to the VR head-mounted display device by using an IDR frame in a GOP in which a p5' frame is located as a start frame. The VR head-mounted display device determines, based on a timestamp of the p2 frame and preset switching duration, to use the p5' frame as a start play frame in the second field of view. (c) in FIG. 12 shows the video frames downloaded by the VR head-mounted display device from the CDN when the VR head-mounted display device switches from FOV1 to FOV2. The VR head-mounted display device may download an i2' frame and the p5' frame. A p4' frame is skipped, to be specific, the VR head-mounted display device does not request to download the p4' frame. (d) in FIG. 12 shows a video frame sequence played in a process in which the VR head-mounted display device switches from FOV1 to FOV2.

A P-frame in a GOP is obtained in a forward encoding mode, in other words, the P-frame in the GOP needs to depend on an I-frame in the GOP during decoding. Therefore, if the second video frame is a P-frame, the CDN needs to send an I-frame in a GOP in which the P-frame is located to the VR head-mounted display device. If the second video frame is an I-frame, the CDN sends the K tile streams corresponding to the second field of view to the VR head-mounted display device by using the I-frame as a start frame.

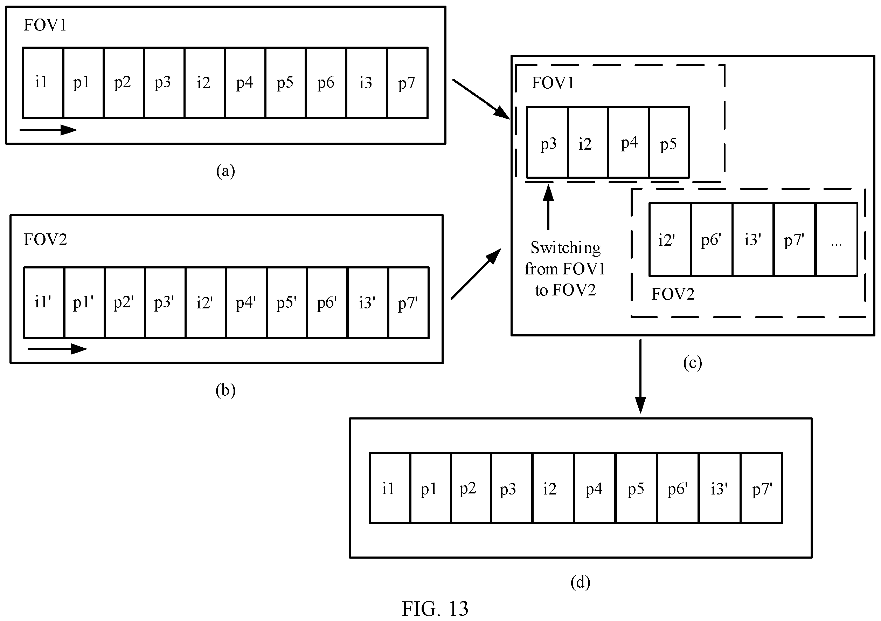

In a fourth example, refer to FIG. 13. A process in which a CDN sends a tile stream is used as an example. FIG. 13 is a schematic diagram of video frames sent by the CDN to a VR head-mounted display device after the VR head-mounted display device sends a field of view switching request to the CDN. (a) in FIG. 13 is a schematic diagram in which the VR head-mounted display device plays a VR scenario video corresponding to FOV1, and the VR head-mounted display device plays a video stream of a tile stream corresponding to FOV1. The VR head-mounted display device may sequentially play a hybrid frame sequence starting from an i1 frame. It is assumed that when playing the p3 frame, the VR head-mounted display device detects a head turning action of a user, and the VR head-mounted display device determines that a field of view is switched from FOV1 to FOV2. (b) in FIG. 13 is a schematic diagram in which the VR head-mounted display device plays a VR scenario video corresponding to FOV2, and the VR head-mounted display device plays the video stream of the tile stream corresponding to FOV2. When the CDN receives the field of view switching request sent by the VR head-mounted display device, the CDN sends the video stream of the tile stream corresponding to FOV2 to the VR head-mounted display device by using an IDR frame in a GOP in which a p5' frame is located as a start frame. The VR head-mounted display device determines, based on a timestamp of the p3 frame and preset switching duration, to use a p6' frame as a start play frame in the second field of view. (c) in FIG. 13 shows the video frames downloaded by the VR head-mounted display device from the CDN when the VR head-mounted display device switches from FOV1 to FOV2. The VR head-mounted display device may download an i2' frame and a p6' frame. A p4' and the p5' frame are skipped, to be specific, the VR head-mounted display device does not request to download the p4' and the p5' frame. (d) in FIG. 13 shows a video frame sequence played in a process in which the VR head-mounted display device switches from FOV1 to FOV2.

A P-frame in a GOP is obtained in a forward encoding mode, in other words, the P-frame in the GOP needs to depend on an I-frame in the GOP during decoding. Therefore, if the second video frame is a P-frame, the CDN needs to send an I-frame in a GOP in which the P-frame is located to the VR head-mounted display device. If the second video frame is an I-frame, the CDN sends the K tile streams corresponding to the second field of view to the VR head-mounted display device by using the I-frame as a start frame.

It should be noted that, in a process of switching the field of view of the VR head-mounted display device, an example in which the GOP includes one key frame and three predictive frames is used. In the foregoing four examples, after the VR head-mounted display device switches the field of view, first four video frames in the tile stream played by the VR head-mounted display device through the second field of view include 1.5 IDR frames and 2.5 P-frames on average. In other words, in the video processing method for a VR scenario provided in this embodiment of this application, when the VR head-mounted display device switches the field of view, a transmission network can bear the video stream transmitted by the CDN to the VR head-mounted display device.

In addition, in the method provided in this embodiment of this application, when receiving the field of view switching request, the CDN switches, within MTHR by using four frames, to the VR scenario video corresponding to the second field of view. The plurality of tile streams in the second field of view form a high-resolution VR scenario video. This reduces a display latency of a high-definition picture in the second field of view.

In a possible implementation, the VR head-mounted display device may send a frame skipping request to the CDN, and the CDN sends a video frame in the frame skipping request to the VR head-mounted display device in response to the frame skipping request.

For example, the VR head-mounted display device may determine the timestamp at which the VR head-mounted display device currently plays the first video frame in the tile stream in the first field of view, and determine the to-be-played second video frame in the second field of view based on the timestamp. If determining that the second video frame is a predictive frame that needs to be played through frame skipping, the VR head-mounted display device may send the frame skipping request to the CDN, to obtain an I-frame in a GOP in which the second video frame is located and the second video frame.

It may be understood that, when receiving the frame skipping request of the VR head-mounted display device, the CDN may send the I-frame in the GOP in which the second video frame is located to the VR head-mounted display device, and send, starting from the second video frame, the tile stream in which the second video frame is located to the VR head-mounted display device.

In a first implementation, the VR head-mounted display device sends a first request to the CDN, where a hypertext transfer protocol (Hypertext Transfer Protocol, HTTP) header of the first request includes: an identifier of the tile stream, a frame sequence number of the second video frame, and a frame sequence number of an IDR frame in the GOP in which the second video frame is located. For example, in the foregoing second example, the first request may be: x-frame-index: i2', p5'. x-frame-index is a name of an HTTP user-defined header field, and may include the identifier of the tile stream. i2' is the frame sequence number of the IDR frame, and p5' is the frame sequence number of the second video frame. It indicates that the VR head-mounted display device requests to obtain an i2' frame, a p5' frame, and a frame after the p5' frame in the tile stream.

In a second implementation, the VR head-mounted display device sends a second request to the CDN, where the second request requests to obtain header information of a tile slice in the tile stream, and the VR head-mounted display device may determine a to-be-requested IDR frame and the second video frame based on the header information of the tile slice. Further, the VR head-mounted display device sends a third request to the CDN, where the third request includes an http range header field, for example, the http range header field is Range: bytes=x-y, z-. x and y correspond to a byte range of the IDR frame in the tile slice, and z is a start byte of a play start frame. It is obtained, based on x-y, that the IDR frame is i2' and the second video frame is p5'.

When receiving the foregoing request (for example, the first request, the second request, or the third request), the CDN may parse the request, search for cached tile stream, and send a corresponding video frame to the VR head-mounted display device.

For example, the CDN sends video frame response data to the VR head-mounted display device.

For example, HTTP/2 206 Patial Content
Date: Wed, 15 Nov 1995 06:25:24 GMT
Last-Modified: Wed, 15 Nov 1995 04:58:08 GMT
Content-Type: multipart/byteranges;boundary=THIS_STR_SEPARATES
--THIS_STR_SEPARATES
Content-Type: video/mpeg4
Content-Range: 600000-710000/1500000

IDR data near a start frame in a new FOV: --THIS_STR_SEPARATES; Content-Type: video/mpeg4; Content-Range: 750000-1499999/1500000.

Data of a start frame and subsequent frames in a new FOV: --THIS_STR_SEPARATES--

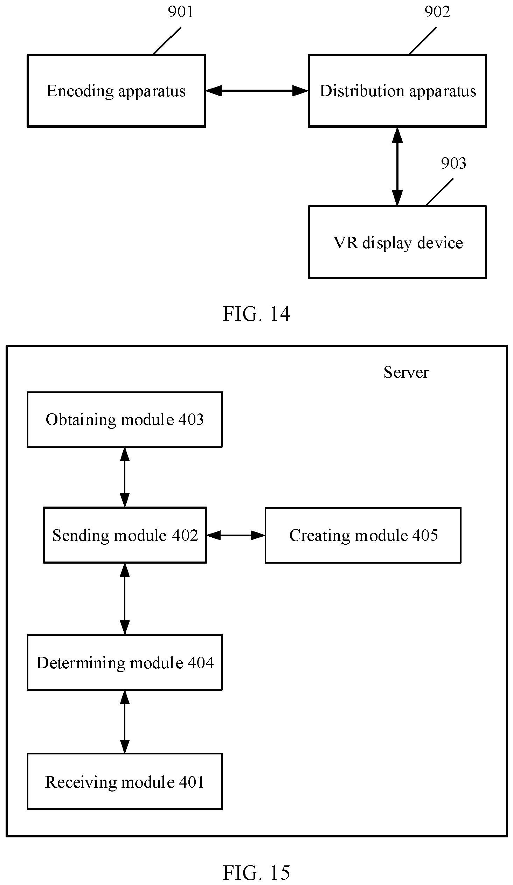

Embodiments further provide a system for displaying a VR live video. As shown in FIG. 14, the system for displaying a VR live video may include an encoding apparatus 901, a distribution apparatus 902, and a VR display device 903. The encoding apparatus 901 is configured to: obtain a VR live streaming material, and generate a low-resolution background stream and M tile streams based on the VR live streaming material. Each of the M tile streams includes one video stream, and M is a positive integer.

The distribution apparatus 902 is configured to: receive the low-resolution background stream and the M tile streams that are generated by the encoding apparatus 901, receive a VR video request of the VR display device 903, and send, to the VR display device 903, a plurality of tile streams corresponding to a corresponding field of view.

The VR display device 903 is configured to send the VR video request to the distribution apparatus 902, to request to obtain a VR live video corresponding to a first field of view, receive the plurality of tile streams that correspond to the field of view and that are sent by the distribution apparatus 902, and display the VR live video with the field of view formed by the plurality of tile streams.

It may be understood that, to implement the foregoing functions, the electronic device includes a corresponding hardware structure and/or software module for performing each of the functions. A person skilled in the art should be easily aware that, in combination with the examples described in embodiments disclosed in this specification, units, algorithms, and steps may be implemented by hardware or a combination of hardware and computer software in embodiments of this application. Whether a function is executed by hardware or hardware driven by computer software depends on particular applications and design constraints of technical solutions. A person skilled in the art may use different methods to implement the described functions for each particular application, but it should not be considered that the implementation goes beyond the scope of embodiments of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

Embodiments of this application further provides a server. As shown in FIG. 15, the server may include: a receiving module 401, a sending module 402, an obtaining module 403, a determining module 404, and a creating module 405.

The creating module 405 may be configured to create M tile streams included in a VR scenario video. Specifically, the M tile streams may form the VR scenario video with a full field of view. In the M tile streams in the VR scenario video, K tile streams are a tile stream corresponding to a second field of view. In other words, the server may receive a material for creating the VR scenario video, so that the creating module 405 in the server may create the VR scenario video.

The receiving module 401 may receive a field of view switching request that is from an electronic device and that is for switching to the second field of view, where the field of view switching request requests to play the VR scenario video through the second field of view.

The sending module 402 is configured to send the K tile streams to the electronic device in response to the field of view switching request. Each of the K tile streams includes one video stream, and K is a positive integer.

It may be understood that, after receiving the field of view switching request from the electronic device, the server may send the K tile streams to the electronic device in response to the field of view switching request, so that the electronic device can create the VR scenario video with a full field of view based on the received K tile streams.

For example, when the server responds to the field of view switching request, the obtaining module 403 may be configured to obtain a timestamp at which the electronic device plays N tile streams. The timestamp indicates that the electronic device is playing a first video frame in the N tile streams, and the first video frame is a key frame or a predictive frame.

The determining module 404 may be configured to determine a second video frame in the K tile streams based on the timestamp and preset switching duration in the server. The second video frame is a key frame or a predictive frame. The sending module may send the K tile streams to the electronic device starting from the second video frame.

For example, if the second video frame is the predictive frame, the sending module 402 may further send, to the electronic device, a key frame in a GOP in which the second video frame is located.

In an implementation, after receiving the field of view switching request, the server sends, to the electronic device, a plurality of tile streams corresponding to the second field of view.

In another possible implementation, after receiving the field of view switching request, the server obtains a timestamp of the second video frame. The server may determine the second video frame in the K tile streams based on the timestamp of the first video frame and the preset switching duration in the server. The sending module may send the K tile streams to the electronic device starting from the second video frame.

It may be understood that each tile stream in the VR scenario video created by the server includes a plurality of slices (Slices), each slice may include a plurality of groups of pictures (Groups Of Pictures, GOPs), and each GOP may include a key frame and X predictive frames after the key frame, where X≥2, and X is a positive integer. The second video frame may be a predictive frame or a key frame. If the second video frame is the predictive frame, the sending module in the server may further send, to the electronic device, the key frame in the GOP in which the second video frame is located.

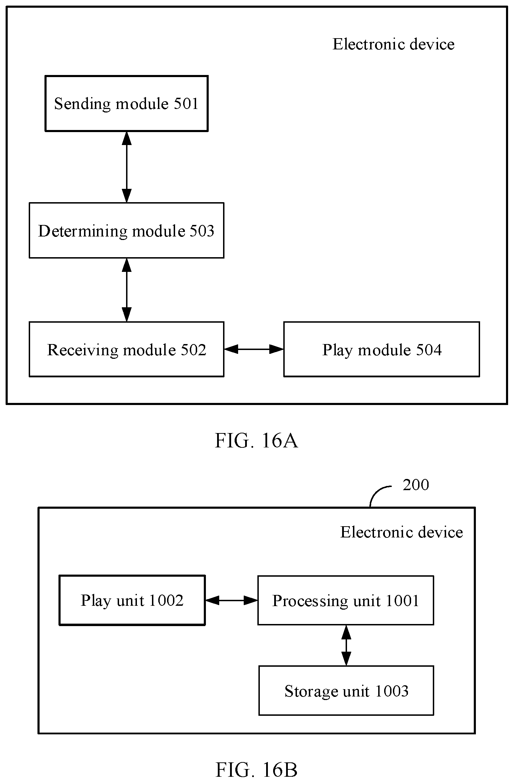

Embodiments of this application further provide an electronic device, as shown in FIG. 16A. As shown in FIG. 16A, the electronic device includes a sending module 501, a receiving module 502, a determining module 503, and a play module 504.

When a field of view of the electronic device changes, the sending module 501 may send a field of view switching request to a server, where the field of view switching request requests to play a VR scenario video through a second field of view.

The receiving module 502 may be configured to receive K tile streams from the server. The K tile streams are a tile stream that is in M tile streams and that corresponds to the second field of view, and each of the K tile streams includes one video stream.

The determining module 503 may be configured to determine a timestamp at which the electronic device is playing a first video frame in N tile streams, where the first video frame is a key frame or a predictive frame.

The play module may be configured to determine, based on the timestamp and preset switching duration, to play a second video frame in the K tile streams, where the second video frame is a key frame or a predictive frame, so that the electronic device plays, starting from the second video frame, the VR scenario video based on the K tile streams through the second field of view.

For example, the electronic device may determine, based on the timestamp and the preset switching duration, to play the second video frame in the K tile streams, where the second video frame is a key frame or a predictive frame.

For another example, the electronic device may send the timestamp of the first video frame to the server, so that the server can determine, based on the timestamp and with reference to the preset switching duration, to send the second video frame in the K tile streams to the electronic device. The second video frame is a key frame or a predictive frame. It should be noted that, if the second video frame is the predictive frame, the electronic device may be further configured to obtain, from the server, a key frame in a GOP in which the second video frame is located.

When an integrated unit is used, FIG. 16B is a schematic diagram of a possible structure of the electronic device in the foregoing embodiments. The electronic device 200 may include a processing unit 1001, a play unit 1002, and a storage unit 1003.

The processing unit 1001 is configured to control and manage an action of the electronic device 200, for example, may be configured to perform step 803 in FIG. 8, and/or may be configured to perform another process of the technology described in this specification.

The play unit 1002 is configured to display a VR live video corresponding to a field of view, for example, may be configured to perform step 806 in FIG. 8, and/or may be configured to perform another process of the technology described in this specification.

The storage unit 1003 is configured to store program code and data of the electronic device 200, for example, may be configured to store a video frame in a to-be-played tile stream.

Certainly, the units and modules in the electronic device 200 include but are not limited to the processing unit 1001, the play unit 1002, and the storage unit 1003. For example, the electronic device 200 may further include an audio unit, and a communication unit. The audio unit is configured to capture a voice sent by a user and play the voice. The communication unit is configured to support communication between the electronic device 200 and another apparatus. The processing unit 1001 may be a processor or a controller, for example, may be a central processing unit (central processing unit, CPU), a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may include an application processor and a baseband processor. The processor may implement or execute various example logical blocks, modules, and circuits described with reference to content disclosed in this application. The processor may alternatively be a combination of processors implementing a computing function, for example, a combination of one or more microprocessors, or a combination of a DSP and a microprocessor. The storage unit 1003 may be a memory. The audio unit may include a microphone, a speaker, a receiver, and the like. The communication unit may be a transceiver, a transceiver circuit, a communication interface, or the like.

For example, the processing unit 1001 is a processor (the processor 210 shown in FIG. 6), the play unit 1002 may be a micro-projection system that cooperates with a display lens to play a VR live video (the display lens 291 and the micro-projection system 292 shown in FIG. 6), and the storage unit 1003 may be a memory (the internal memory 230 shown in FIG. 6). The electronic device 200 provided in this embodiment of this application may be the electronic device 200 shown in FIG. 6. The processor, the memory, the display lens, the micro-projection system, and the like may be coupled together, for example, connected through a bus.

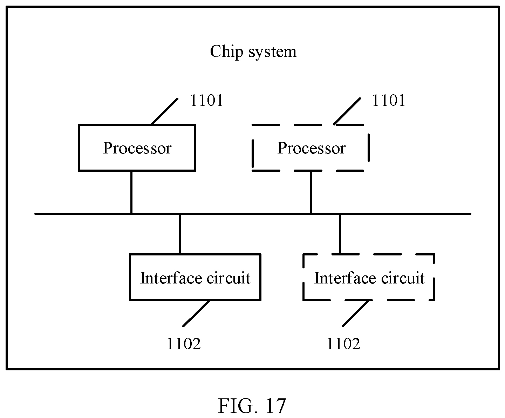

An embodiment of this application further provides a chip system. As shown in FIG. 17, the chip system includes at least one processor 1101 and at least one interface circuit 1102. The processor 1101 and the interface circuit 1102 may be interconnected through a line. For example, the interface circuit 1102 may be configured to receive a signal from another apparatus (for example, a memory in an electronic device). For another example, the interface circuit 1102 may be configured to send a signal to another apparatus (for example, the processor 1101). For example, the interface circuit 1102 may read instructions stored in the memory, and send the instructions to the processor 1101. When the instructions are executed by the processor 1101, the electronic device is enabled to perform the steps in the foregoing embodiments. Certainly, the chip system may further include another discrete device. This is not specifically limited in this embodiment of this application.

An embodiment of this application further provides a computer program product. When the computer program product is run on a computer, the computer is enabled to perform the functions or steps performed by the electronic device in the foregoing method embodiments.

The foregoing descriptions about implementations allow a person skilled in the art to clearly understand that, for the purpose of convenient and brief description, division of the foregoing functional modules is used as an example for illustration. In actual application, the foregoing functions can be allocated to different functional modules and implemented based on a requirement, in other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division. There may be another division manner in actual implementation. For example, a plurality of units or components may be combined or integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. Some or all of the units may be selected based on actual needs to achieve the objective of the solutions of the embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A video processing method for a virtual reality VR scenario, wherein the method comprises:
receiving, by a server, a field of view switching request that is from an electronic device and that is for switching to a second field of view, wherein the field of view switching request requests to play a VR scenario video through the second field of view, the VR scenario video comprises M tile streams, and M is a positive integer; and
sending, by the server, K tile streams to the electronic device in response to the field of view switching request, wherein the K tile streams are a tile stream that is in the M tile streams and that corresponds to the second field of view, each of the K tile streams comprises one video stream, and K is a positive integer.

2. The method according to claim 1, wherein each tile stream comprises a plurality of slices, each slice comprises a plurality of groups of pictures GOPs, and each GOP comprises one key frame and X predictive frames after the key frame, wherein X≥2, and X is a positive integer.

3. The method according to claim 1 or 2, wherein before the receiving, by a server, a field of view switching request from an electronic device, the method further comprises:
receiving, by the server, a VR video request from the electronic device, wherein the VR video request requests to play the VR scenario video through a first field of view; and
sending, by the server, N tile streams to the electronic device in response to the VR video request, wherein the N tile streams are a tile stream that is in the M tile streams and that corresponds to the first field of view, and each of the N tile streams comprises one video stream.

4. The method according to claim 2 or 3, wherein the sending, by the server, K tile streams to the electronic device in response to the field of view switching request comprises:
obtaining, by the server in response to the field of view switching request, a timestamp at which the electronic device plays the N tile streams, wherein the timestamp indicates that the electronic device is playing a first video frame in the N tile streams, and the first video frame is a key frame or a predictive frame;
determining, by the server, a second video frame in the K tile streams based on the timestamp and preset switching duration, wherein the second video frame is a key frame or a predictive frame; and
sending, by the server, the K tile streams to the electronic device starting from the second video frame.

5. The method according to claim 4, wherein the method further comprises:
if the second video frame is the predictive frame, sending, by the server to the electronic device, a key frame in a GOP in which the second video frame is located.

6. The method according to claim 5, wherein the method further comprises:
receiving, by the server, a video frame request from the electronic device, wherein the video frame request comprises a frame sequence number of the second video frame and a frame sequence number of the key frame in the GOP in which the second video frame is located, the frame sequence number of the second video frame indicates an identifier of the second video frame in the GOP, and the frame sequence number of the key frame indicates an identifier of the key frame in the GOP; and
sending, by the server in response to the video frame request, to the electronic device, the key frame in the GOP in which the second video frame is located and the second video frame.

7. The method according to claim 4, wherein the method further comprises:
if the second video frame is the key frame, receiving, by the server, a video frame request from the electronic device, wherein the video frame request comprises a frame sequence number of the key frame in a GOP, and the frame sequence number of the key frame indicates an identifier of the key frame in the GOP; and
sending, by the server, the key frame to the electronic device in response to the video frame request.

8. The method according to any one of claims 1 to 7, wherein the field of view switching request comprises the second field of view, and the second field of view is used to determine the K tile streams corresponding to the second field of view; or
the field of view switching request comprises an identifier of the K tile streams and the frame sequence number of the second video frame corresponding to the K tile streams, and if the second video frame is the predictive frame, the field of view switching request further comprises the frame sequence number of the key frame in the GOP in which the second video frame is located, wherein
the frame sequence number of the second video frame indicates the identifier of the second video frame in the GOP, and the frame sequence number of the key frame indicates the identifier of the key frame in the GOP

9. A video processing method for a virtual reality VR scenario, wherein the method comprises:
sending a field of view switching request to a server when a field of view of an electronic device changes, wherein the field of view switching request requests to play a VR scenario video through a second field of view, the VR scenario video comprises M tile streams, and M is a positive integer;
receiving K tile streams from the server, wherein the K tile streams are a tile stream that is in the M tile streams and that corresponds to the second field of view, and each of the K tile streams comprises one video stream; and
playing, by the electronic device based on the K tile streams, a VR scenario video corresponding to the second field of view.

10. The method according to claim 9, wherein the tile stream comprises a plurality of slices, each slice comprises a plurality of groups of pictures GOPs, and each GOP comprises one key frame and X predictive frames after the key frame, wherein X≥2, and X is a positive integer.

11. The method according to claim 9 or 10, wherein before the sending a field of view switching request to a server when a field of view of an electronic device changes, the method further comprises:
sending a VR video request to the server, wherein the VR video request requests to play the VR scenario video through a first field of view;
receiving, by the electronic device, N tile streams from the server, wherein the N tile streams are a tile stream that is in the M tile streams and that corresponds to the first field of view, and each of the N tile streams comprises one video stream; and
playing, by the electronic device, the VR scenario video based on the N tile streams through the first field of view.

12. The method according to claim 11, wherein the method further comprises:
determining a timestamp at which the electronic device is playing a first video frame in the N tile streams, wherein the first video frame is a key frame or a predictive frame; and
the playing, by the electronic device based on the K tile streams, a VR scenario video corresponding to the second field of view comprises:
determining, by the electronic device based on the timestamp and preset switching duration, to play a second video frame in the K tile streams, wherein the second video frame is a key frame or a predictive frame; and
playing, by the electronic device starting from the second video frame, the VR scenario video based on the K tile streams through the second field of view.

13. The method according to claim 12, wherein the second video frame is the predictive frame;
before the playing, by the electronic device starting from the second video frame, the VR scenario video based on the K tile streams through the second field of view, the method further comprises:
obtaining, by the electronic device from the server, the second video frame and a key frame in a GOP in which the second video frame is located; and
obtaining, by the electronic device, the K tile streams starting from the second video frame; and
the playing, by the electronic device starting from the second video frame, the VR scenario video based on the K tile streams through the second field of view comprises:
decoding, by the electronic device, the second video frame based on the key frame in the GOP in which the second video frame is located, and starting from the second video frame, playing the VR scenario video based on the K tile streams through the second field of view.

14. The method according to claim 11, wherein the method further comprises:
determining a timestamp at which the electronic device is playing a first video frame in the N tile streams, wherein the first video frame is a key frame or a predictive frame; and
sending, by the electronic device, the timestamp to the server, wherein the timestamp is used to determine, with reference to preset switching duration, that the server starts to send a second video frame in the K tile streams to the electronic device, and the second video frame is a key frame or a predictive frame; and
the playing, by the electronic device based on the K tile streams, a VR scenario video corresponding to the second field of view comprises:
playing, by the electronic device starting from the second video frame, the VR scenario video based on the K tile streams through the second field of view.

15. The method according to claim 14, wherein the second video frame is the predictive frame, and the method further comprises:
obtaining, by the electronic device from the server, a key frame in a GOP in which the second video frame is located; and
the playing, by the electronic device starting from the second video frame, the VR scenario video based on the K tile streams through the second field of view comprises:
decoding, by the electronic device, the second video frame based on the key frame in the GOP in which the second video frame is located, and starting from the second video frame, playing the VR scenario video based on the K tile streams through the second field of view.

16. The method according to any one of claims 9 to 15, wherein
the field of view switching request comprises the second field of view, and the second field of view is used to determine the K tile streams corresponding to the second field of view; or
the field of view switching request comprises an identifier of the K tile streams and a frame sequence number of the second video frame corresponding to the K tile streams, and if the second video frame is the predictive frame, the field of view switching request further comprises a frame sequence number of the key frame in the GOP in which the second video frame is located, wherein
the frame sequence number of the second video frame indicates an identifier of the second video frame in the GOP, and the frame sequence number of the key frame indicates an identifier of the key frame in the GOP.

17. A server, wherein the server comprises a memory and one or more processors, and the memory is coupled to the processor, wherein
the memory is configured to store computer program code, the computer program code comprises computer instructions; and when the processor executes the computer instructions, the server is enabled to perform the operation according to any one of claims 1 to 8.

18. An electronic device, wherein the electronic device comprises a memory, a display apparatus, and one or more processors, and the memory and the display apparatus are coupled to the processor, wherein
the memory is configured to store computer program code, the computer program code comprises computer instructions; and when the processor executes the computer instructions, the electronic device is enabled to perform the operation according to any one of claims 9 to 16.

19. A chip system, wherein the chip system is used in an electronic device comprising a memory; the chip system comprises one or more interface circuits and one or more processors; the interface circuit and the processor are interconnected through a line; the interface circuit is configured to receive a signal from the memory, and send the signal to the processor, wherein the signal comprises computer instructions stored in the memory; and when the processor executes the computer instructions, the electronic device performs the method according to any one of claims 1 to 16.

20. A computer-readable storage medium, comprising computer instructions, wherein when the computer instructions are run on a control device, the control device is enabled to perform the method according to any one of claims 1 to 16.

21. A computer program product, wherein when the computer program product is run on a computer, the computer is enabled to perform the method according to any one of claims 1 to 16.
